# EUROPEAN PATENT APPLICATION

(11) **EP 4 661 307 A1**
(43) Date of publication of application: **10.12.2025**
(21) Application number: 23922511.3
(22) Date of filing: 21.12.2023
(51) Int. Cl.: H04B 7/06, H04B 7/0408

(54) **COMMUNICATION METHOD, COMMUNICATION APPARATUS, AND COMMUNICATION SYSTEM**

(30) Priority: 17.02.2023 CN 202310153303
(71) Applicant: Huawei Technologies Co., Ltd., Shenzhen, Guangdong 518129 (CN)
(72) Inventor: ZHANG, Yi, Shenzhen, Guangdong 518129 (CN); QI, Hong, Shenzhen, Guangdong 518129 (CN); WANG, Mingzhe, Shenzhen, Guangdong 518129 (CN); SU, Hongjia, Shenzhen, Guangdong 518129 (CN)
(74) Representative: Goddar, Heinz J.
(86) International application number: PCT/CN2023/140553
(87) International publication number: WO 2024/169396

(57) **Abstract**

This application provides a communication method, a communication apparatus, and a communication system. In the method, a receive-end terminal device (namely, a first terminal device) determines a plurality of receive beams, obtains an intersection set between candidate resource sets of the plurality of receive beams, and then indicates the intersection set to a transmit-end terminal device (namely, a second terminal device) by using configuration information. When the transmit-end terminal device sends sidelink information to the receive-end terminal device by using a time-frequency resource in the intersection set, the receive-end terminal device may select one of the plurality of receive beams for reception. When the receive beam is subject to interference, the receive-end terminal device may reselect one of the plurality of receive beams for reception. Therefore, in this solution, possible interference caused by a single beam direction can be reduced, to effectively utilize a space domain resource of a beam and improve communication quality.

## Description

### CROSS-REFERENCE TO RELATED APPLICATIONS

This application claims priority to Chinese Patent Application No. 202310153303.6, filed with the China National Intellectual Property Administration on February 17, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

With development of communication technologies, application of a communication technology between terminal devices is increasingly popular. Two terminal devices that communicate with each other may be terminal devices that communicate with each other in a vehicle-to-everything (vehicle-to-everything, V2X) communication application, or may be terminal devices that communicate with each other in a device-to-device (device-to-device, D2D) application.

In current communication between terminal devices, how to improve utilization of a space domain resource of a beam and improve communication quality is to be resolved.

### SUMMARY

Embodiments of this application provide a communication method, a communication apparatus, and a communication system, to improve communication quality during communication between terminal devices.

According to a first aspect, an embodiment of this application provides a communication method. The method may be performed by a first terminal device or a module (for example, a chip) used in a first terminal device. The method includes: determining first candidate resource sets respectively corresponding to at least two receive beams in a receive beam set; determining a second candidate resource set, where the second candidate resource set is an intersection set between the first candidate resource sets respectively corresponding to the at least two receive beams; and sending configuration information to a second terminal device, where the configuration information indicates the second candidate resource set, and the second candidate resource set is used to receive sidelink information from the second terminal device.

In the foregoing solution, a receive-end terminal device (namely, the first terminal device) determines a plurality of receive beams, obtains an intersection set between candidate resource sets of the plurality of receive beams, and then indicates the intersection set to a transmit-end terminal device (namely, the second terminal device) by using configuration information. When the transmit-end terminal device sends sidelink information to the receive-end terminal device by using a time-frequency resource in the intersection set, the receive-end terminal device may select one of the plurality of receive beams for reception. When the receive beam is subject to interference, the receive-end terminal device may reselect one of the plurality of receive beams for reception. Therefore, in this solution, possible interference caused by a single beam direction can be reduced, to effectively utilize a space domain resource of a beam and improve communication quality.

In a possible implementation method, determining the first candidate resource sets respectively corresponding to the at least two receive beams in the receive beam set includes: for each of the at least two receive beams, excluding a first resource from a resource selection window corresponding to each receive beam, to obtain a first candidate resource set corresponding to each receive beam, where the first resource includes a periodic resource that is within the resource selection window and that corresponds to an unsensed slot in a sensing window corresponding to each receive beam.

In the foregoing solution, the first resource may be a time-frequency resource reserved for use by another terminal device. Therefore, the first resource is excluded from the resource selection window, to avoid a resource conflict during selection of a time-frequency resource.

In a possible implementation method, at least one reference signal is received from the second terminal device; and the at least two receive beams in the receive beam set are determined based on the at least one reference signal, where reference signal received power (Reference Signal Received Power, RSRP) measurement results, for the reference signal, that respectively correspond to the at least two receive beams are greater than an RSRP threshold.

In a possible implementation method, the at least one reference signal includes one reference signal; and that the at least two receive beams in the receive beam set are determined based on the at least one reference signal includes: determining the at least two receive beams based on RSRP measurement results obtained when the reference signal is received separately by using receive beams in the receive beam set.

In a possible implementation method, the at least one reference signal includes at least two reference signals; and that the at least two receive beams in the receive beam set are determined based on the at least one reference signal includes: determining, based on RSRP measurement results obtained when the at least two reference signals are received separately by using receive beams in the receive beam set, at least two target receive beams respectively corresponding to the receive beams in the receive beam set, where RSRP measurement results, for the reference signals, that respectively correspond to the at least two target receive beams are greater than the RSRP threshold; and determining, as the at least two receive beams, an intersection set between the at least two target receive beams respectively corresponding to the receive beams in the receive beam set.

In a possible implementation method, at least one transmit beam in a transmit beam set is determined based on the at least one reference signal, where the transmit beam set includes a transmit beam of the second terminal device, and the at least one transmit beam corresponds to the at least two receive beams. One transmit beam corresponds to one reference signal.

In a possible implementation method, at least one first reference signal in a reference signal set is determined based on the at least one reference signal, where the reference signal set includes a reference signal of the second terminal device, and an RSRP measurement result for a receive beam corresponding to the at least one first reference signal is greater than the RSRP threshold. One reference signal corresponds to one transmit beam.

In a possible implementation method, indication information is sent to the second terminal device, where the indication information indicates the at least one transmit beam.

In the foregoing solution, the first terminal device indicates, to the second terminal device, the at least one transmit beam for sending sidelink information, and the at least one transmit beam corresponds to the at least two receive beams. In this way, the second terminal device sends sidelink information to the first terminal device on the at least one transmit beam, so that communication quality can be improved.

In a possible implementation method, that the indication information indicates the at least one transmit beam includes: The indication information is identification information of a sidelink (sidelink, SL) transmission configuration indicator (Transmission Configuration Indicator, TCI) state, and the identification information of the SL TCI state corresponds to at least one first signal.

In a possible implementation method, indication information is sent to the second terminal device, where the indication information indicates the at least two receive beams in the receive beam set.

In the foregoing solution, the first terminal device indicates the at least two receive beams of the first terminal device to the second terminal device, and then the second terminal device determines, based on the indicated at least two receive beams, a transmit beam that should be used. In this way, a transmit beam can be accurately determined.

In a possible implementation method, the first signal is a sidelink synchronization signal block (sidelink synchronization signal block, SL-SSB) or an SL channel state information reference signal (Channel State Information Reference Signal, CSI-RS).

In a possible implementation method, first sidelink information is received from the second terminal device through a first receive beam of the at least two receive beams.

In a possible implementation method, an RSRP measurement result corresponding to the first receive beam is a highest one of the RSRP measurement results corresponding to the at least two receive beams.

In the foregoing solution, the first terminal device receives, by using the first receive beam corresponding to a highest RSRP measurement result, sidelink information sent by the second terminal device, so that communication quality can be improved.

In a possible implementation method, the first receive beam is any one of the at least two receive beams.

In a possible implementation method, second sidelink information is received from the second terminal device through a second receive beam of the at least two receive beams.

In the foregoing solution, when the first receive beam is subject to interference, the first terminal device may reselect the second receive beam from the plurality of receive beams for reception. Therefore, in this solution, possible interference caused by a single beam direction can be reduced, to effectively utilize a space domain resource of a beam and improve communication quality.

In a possible implementation method, the configuration information is carried in sidelink control information (sidelink control information, SCI) and/or a medium access control control element (medium access control control element, MAC CE).

According to a second aspect, an embodiment of this application provides a communication method. The method may be performed by a second terminal device or a module (for example, a chip) used in a second terminal device. The method includes: receiving configuration information from a first terminal device, where the configuration information indicates a second candidate resource set, and a time-frequency resource in the second candidate resource set is an intersection set between first candidate resource sets respectively corresponding to at least two receive beams of the first terminal device; and selecting a first time-frequency resource from the second candidate resource set, and sending first sidelink information to the first terminal device on the first time-frequency resource.

In the foregoing solution, a receive-end terminal device (namely, the first terminal device) determines a plurality of receive beams, obtains an intersection set between candidate resource sets of the plurality of receive beams, and then indicates the intersection set to a transmit-end terminal device (namely, the second terminal device) by using configuration information. When the transmit-end terminal device sends sidelink information to the receive-end terminal device by using a time-frequency resource in the intersection set, the receive-end terminal device may select one of the plurality of receive beams for reception. When the receive beam is subject to interference, the receive-end terminal device may reselect one of the plurality of receive beams for reception. Therefore, in this solution, possible interference caused by a single beam direction can be reduced, to effectively utilize a space domain resource of a beam and improve communication quality.

In a possible implementation method, indication information is received from the first terminal device, where the indication information indicates at least one transmit beam in a transmit beam set of the second terminal device.

In the foregoing solution, the first terminal device indicates, to the second terminal device, the at least one transmit beam for sending sidelink information, and an RSRP measurement result for a receive beam corresponding to the at least one transmit beam is greater than an RSRP threshold. In this way, the second terminal device sends sidelink information to the first terminal device on the at least one transmit beam, so that communication quality can be improved.

In a possible implementation method, that the indication information indicates the at least one transmit beam in the transmit beam set of the second terminal device includes: The indication information is identification information of an SL TCI state, and the identification information of the SL TCI state corresponds to at least one first signal.

In a possible implementation method, indication information is received from the first terminal device, where the indication information indicates the at least two receive beams in a receive beam set.

In the foregoing solution, the first terminal device indicates the at least two receive beams of the first terminal device to the second terminal device, and then the second terminal device determines, based on the indicated at least two receive beams, a transmit beam that should be used. In this way, a transmit beam can be accurately determined.

In a possible implementation method, the first signal is an SL-SSB or an SL CSI-RS.

In a possible implementation method, sending the first sidelink information to the first terminal device on the first time-frequency resource includes: sending the first sidelink information to the first terminal device on the first time-frequency resource through a first transmit beam of the at least one transmit beam.

In a possible implementation method, an RSRP measurement result for a receive beam corresponding to the first transmit beam is a highest one of an RSRP measurement result for a receive beam corresponding to the at least one transmit beam.

In the foregoing solution, the second terminal device sends sidelink information to the first terminal device by using the first transmit beam corresponding to a highest RSRP measurement result, so that communication quality can be improved.

In a possible implementation method, the first transmit beam is any one of the at least one transmit beam.

In a possible implementation method, a second time-frequency resource is selected from the second candidate resource set, and second sidelink information is sent to the first terminal device on the second time-frequency resource through a second transmit beam of the at least one transmit beam.

In the foregoing solution, when the first transmit beam is subject to interference or the first transmit beam is blocked, the second terminal device may reselect the second transmit beam from the plurality of transmit beams for transmission. Therefore, in this solution, possible interference caused by a single beam direction can be reduced, to effectively utilize a space domain resource of a beam and improve communication quality.

In a possible implementation method, the configuration information is carried in SCI and/or a MAC CE.

According to a third aspect, an embodiment of this application provides a communication method. The method may be performed by a first terminal device or a module (for example, a chip) used in a first terminal device. The method includes: determining a candidate resource set corresponding to a receive beam in a receive beam set; and sending configuration information to a second terminal device, where the configuration information indicates the candidate resource set, and the candidate resource set is used for the second terminal device to send sidelink information to the terminal device on a time-frequency resource in the candidate resource set.

In the foregoing solution, a receive-end terminal device (namely, the first terminal device) selects a candidate resource set used for the second terminal device to communicate with the first terminal device, so that an appropriate candidate resource can be selected, to improve communication quality during communication between the first terminal device and the second terminal device.

In a possible implementation method, determining the candidate resource set corresponding to the receive beam in the receive beam set includes: excluding a first resource from a resource selection window corresponding to the receive beam, to obtain the candidate resource set corresponding to the receive beam, where the first resource includes a periodic resource that is within the resource selection window and that corresponds to an unsensed slot in a sensing window corresponding to the receive beam.

In the foregoing solution, the first resource may be a time-frequency resource reserved for use by another terminal device. Therefore, the first resource is excluded from the resource selection window, to avoid a resource conflict during selection of a time-frequency resource.

In a possible implementation method, at least two reference signals are received from the second terminal device; and the receive beam in the receive beam set is determined based on the at least two reference signals, where an RSRP measurement result for a reference signal corresponding to the receive beam is greater than an RSRP threshold.

In a possible implementation method, that the receive beam in the receive beam set is determined based on the at least two reference signals includes: determining, based on RSRP measurement results obtained when the at least two reference signals are received separately by using receive beams in the receive beam set, at least one target receive beam respectively corresponding to the receive beams in the receive beam set, where RSRP measurement results, for the reference signals, that respectively correspond to the at least one target receive beam are greater than the RSRP threshold; and determining, as the receive beam, an intersection set between the at least one target receive beam respectively corresponding to the receive beams in the receive beam set.

In a possible implementation method, at least two transmit beams in a transmit beam set are determined based on the at least two reference signals, where the transmit beam set includes a transmit beam of the second terminal device, the at least two transmit beams correspond to the receive beam, and an RSRP measurement result for the receive beam is greater than the RSRP threshold. One transmit beam corresponds to one reference signal.

In a possible implementation method, at least two first reference signals in a reference signal set are determined based on the at least two reference signals, where the reference signal set includes a reference signal of the second terminal device, and RSRP measurement results for receive beams corresponding to the at least two first reference signals are greater than the RSRP threshold. One reference signal corresponds to one transmit beam.

In a possible implementation method, indication information is sent to the second terminal device, where the indication information indicates the at least two transmit beams.

In the foregoing solution, the first terminal device indicates, to the second terminal device, the at least two transmit beams for sending sidelink information, the at least two transmit beams correspond to the receive beam, and the RSRP measurement result for the receive beam is greater than the RSRP threshold. In this way, the second terminal device sends sidelink information to the first terminal device on the at least two transmit beams, so that communication quality can be improved.

In a possible implementation method, that the indication information indicates the at least two transmit beams includes: The indication information is identification information of an SL TCI state, and the identification information of the SL TCI state corresponds to at least two first signals.

In a possible implementation method, indication information is sent to the second terminal device, where the indication information indicates the receive beam in the receive beam set.

In the foregoing solution, the first terminal device indicates the receive beam of the first terminal device to the second terminal device, and then the second terminal device determines, based on the indicated receive beam, a transmit beam that should be used. In this way, a transmit beam can be accurately determined.

In a possible implementation method, the first signal is an SL-SSB or an SL CSI-RS.

In a possible implementation method, the configuration information is carried in SCI and/or a MAC CE.

According to a fourth aspect, an embodiment of this application provides a communication method. The method may be performed by a second terminal device or a module (for example, a chip) used in a second terminal device. The method includes: receiving configuration information from a first terminal device, where the configuration information indicates a candidate resource set corresponding to a receive beam in a receive beam set of the first terminal device; and selecting a first time-frequency resource from the candidate resource set, and sending first sidelink information to the first terminal device on the time-frequency resource.

In the foregoing solution, a receive-end terminal device (namely, the first terminal device) selects a candidate resource set used for the second terminal device to communicate with the first terminal device, so that an appropriate candidate resource can be selected, to improve communication quality during communication between the first terminal device and the second terminal device.

In a possible implementation method, indication information is received from the first terminal device, where the indication information indicates at least two transmit beams in a transmit beam set of the second terminal device.

In the foregoing solution, the first terminal device indicates, to the second terminal device, the at least two transmit beams for sending sidelink information, the at least two transmit beams correspond to the receive beam, and the RSRP measurement result is greater than an RSRP threshold. In this way, the second terminal device sends sidelink information to the first terminal device on the at least two transmit beams, so that communication quality can be improved.

In a possible implementation method, that the indication information indicates the at least two transmit beams in the transmit beam set of the second terminal device includes: The indication information is identification information of an SL TCI state, and the identification information of the SL TCI state corresponds to at least two first signals.

In a possible implementation method, indication information is received from the first terminal device, where the indication information indicates the receive beam in the receive beam set.

In the foregoing solution, the first terminal device indicates the receive beam of the first terminal device to the second terminal device, and then the second terminal device determines, based on the indicated receive beam, a transmit beam that should be used. In this way, a transmit beam can be accurately determined.

In a possible implementation method, the first signal is an SL-SSB or an SL CSI-RS.

In a possible implementation method, sending the first sidelink information to the first terminal device on the first time-frequency resource includes: sending the first sidelink information to the first terminal device on the first time-frequency resource through a first transmit beam of the at least two transmit beams.

In a possible implementation method, an RSRP measurement result for a receive beam corresponding to the first transmit beam is a highest one of RSRP measurement results for receive beams corresponding to the at least two transmit beams.

In the foregoing solution, the second terminal device sends sidelink information to the first terminal device by using the first transmit beam corresponding to a highest RSRP measurement result, so that communication quality can be improved.

In a possible implementation method, the first transmit beam is any one of the at least two transmit beams.

In a possible implementation method, a second time-frequency resource is selected from the candidate resource set, and second sidelink information is sent to the first terminal device on the second time-frequency resource through a second transmit beam of the at least two transmit beams.

In the foregoing solution, when the first transmit beam is subject to interference or the first transmit beam is blocked, the second terminal device may reselect the second transmit beam from the plurality of transmit beams for transmission. Therefore, in this solution, possible interference caused by a single beam direction can be reduced, to effectively utilize a space domain resource of a beam and improve communication quality.

In a possible implementation method, the configuration information is carried in SCI and/or a MAC CE.

According to a fifth aspect, an embodiment of this application provides a communication apparatus. The apparatus may be a first terminal device or a module (for example, a chip) used in a first terminal device. The apparatus has a function of implementing any one of the implementation methods of the first aspect or the third aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be a second terminal device or a module (for example, a chip) used in a second terminal device. The apparatus has a function of implementing any one of the implementation methods of the second aspect or the fourth aspect. The function may be implemented by hardware, or may be implemented by hardware executing corresponding software. The hardware or the software includes one or more modules corresponding to the function.

According to a seventh aspect, an embodiment of this application provides a communication apparatus, including units or means (means) for performing the steps of any one of the implementation methods of the first aspect to the fourth aspect.

According to an eighth aspect, an embodiment of this application provides a communication apparatus, including a processor and an interface circuit. The processor is configured to communicate with another apparatus through the interface circuit, and perform any one of the implementation methods of the first aspect to the fourth aspect. There is one or more processors.

According to a ninth aspect, an embodiment of this application provides a communication apparatus, including a processor coupled to a memory. The processor is configured to invoke a program stored in the memory, to perform any one of the implementation methods of the first aspect to the fourth aspect. The memory may be located inside or outside the apparatus. In addition, there may be one or more processors.

According to a tenth aspect, an embodiment of this application provides a communication apparatus, including a processor and a memory. The memory is configured to store computer instructions. When the apparatus runs, the processor executes the computer instructions stored in the memory, to enable the apparatus to perform any one of the implementation methods of the first aspect to the fourth aspect.

According to an eleventh aspect, an embodiment of this application further provides a computer program product. The computer program product includes a computer program or instructions, and when the computer program or instructions is/are run on a communication apparatus, any one of the implementation methods of the first aspect to the fourth aspect is performed.

According to a twelfth aspect, an embodiment of this application further provides a computer-readable storage medium. The computer-readable storage medium stores instructions. When the instructions are run on a communication apparatus, any one of the implementation methods of the first aspect to the fourth aspect is performed.

According to a thirteenth aspect, an embodiment of this application further provides a chip system, including a processor, configured to perform any one of the implementation methods of the first aspect to the fourth aspect.

According to a fourteenth aspect, an embodiment of this application further provides a communication system. The communication system includes a first terminal device for performing any one of the implementation methods of the first aspect, and a second terminal device for performing any one of the implementation methods of the second aspect.

According to a fifteenth aspect, an embodiment of this application further provides a communication method. The method includes: A first terminal device determines first candidate resource sets respectively corresponding to at least two receive beams in a receive beam set. The first terminal device determines a second candidate resource set, where the second candidate resource set is an intersection set between the first candidate resource sets respectively corresponding to the at least two receive beams. The first terminal device sends configuration information to a second terminal device, where the configuration information indicates the second candidate resource set. The second terminal device receives the configuration information from the first terminal device. The second terminal device selects a first time-frequency resource from the second candidate resource set, and sends first sidelink information to the first terminal device on the first time-frequency resource.

According to a sixteenth aspect, an embodiment of this application further provides a communication system. The communication system includes a first terminal device for performing any one of the implementation methods of the third aspect, and a second terminal device for performing any one of the implementation methods of the fourth aspect.

According to a seventeenth aspect, an embodiment of this application further provides a communication method. The method includes: A first terminal device determines a candidate resource set corresponding to a receive beam in a receive beam set. The first terminal device sends configuration information to a second terminal device, where the configuration information indicates the candidate resource set. The second terminal device receives the configuration information from the first terminal device. The second terminal device selects a first time-frequency resource from the candidate resource set, and sends first sidelink information to the first terminal device on the time-frequency resource.

### BRIEF DESCRIPTION OF DRAWINGS

FIG. 1(a) is a diagram of an architecture of a communication system to which an embodiment of this application is applied;
FIG. 1(b) is a diagram of a network device;
FIG. 1(c) is a diagram of a communication system according to an embodiment of this application;
FIG. 2 is a diagram of time-frequency resources occupied by a PSCCH and a PSSCH;
FIG. 3 is an example diagram of a QCL relationship;
FIG. 4(a) is a diagram of a communication method according to an embodiment of this application;
FIG. 4(b) is a diagram of a communication method according to an embodiment of this application;
FIG. 5(a) is a diagram of beam interference;
FIG. 5(b) is another diagram of beam interference;
FIG. 6 is an example diagram of beam sweeping;
FIG. 7 is an example diagram of a sensing window;
FIG. 8 is a diagram of a communication method according to an embodiment of this application;
FIG. 9 is an example diagram of a sensing window and a resource selection window of a UE-A;
FIG. 10 is an example diagram of beam selection;
FIG. 11 is an example diagram of determining a candidate resource set of a UE-A;
FIG. 12 is an example diagram in which different time-frequency resources correspond to different beams;
FIG. 13 is an example diagram of beam sweeping;
FIG. 14 is an example diagram of beam selection;
FIG. 15 is an example diagram of determining a candidate resource set of a UE-A;
FIG. 16 is a diagram of selecting a transmission resource by a transmit-end UE;
FIG. 17 is an example diagram of beam sweeping;
FIG. 18 is an example diagram of beam selection;
FIG. 19 is a diagram of a structure of a communication apparatus according to an embodiment of this application; and
FIG. 20 is a diagram of a structure of a communication apparatus according to an embodiment of this application.

### DESCRIPTION OF EMBODIMENTS

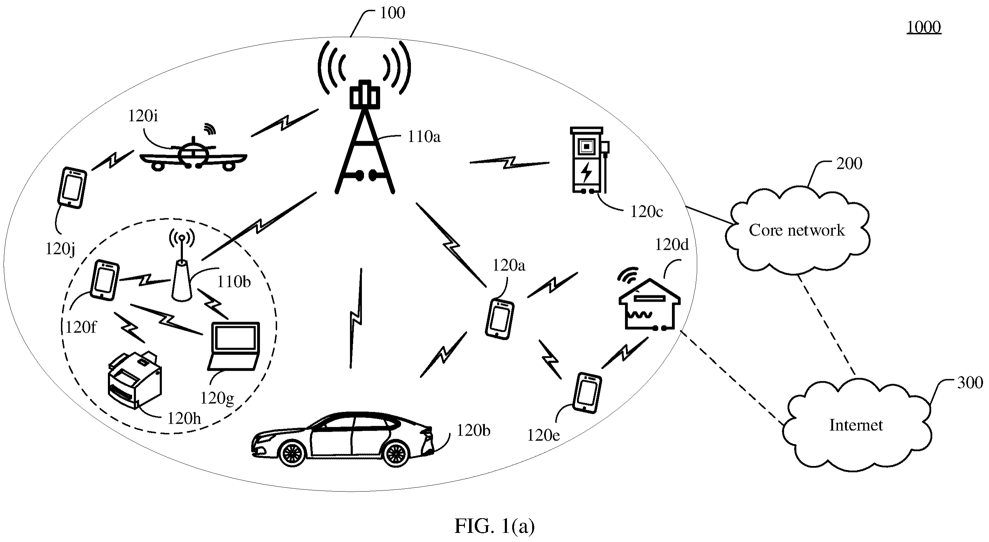

FIG. 1(a) is a diagram of an architecture of a communication system to which an embodiment of this application is applied. The communication system 1000 shown in FIG. 1(a) includes a radio access network 100 and a core network 200. Optionally, the communication system 1000 further includes an internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless manner or a wired manner. A core network device and the network device may be different physical devices independent of each other, or functions of the core network device and logical functions of the network device may be integrated into one physical device, or some functions of the core network device and some functions of the network device may be integrated into one physical device. Terminal devices may be connected to each other in a wired or wireless manner, and network devices may be connected to each other in a wired or wireless manner. FIG. 1(a) is only a diagram. The communication system may further include other network devices, for example, may further include a wireless relay device and a wireless backhaul device that are not shown in FIG. 1(a).

The network device is an access device used by the terminal device to access the communication system in a wired or wireless manner. The network device may be a base station (base station), an evolved NodeB (evolved NodeB, eNodeB), a transmission and reception point (transmission and reception point, TRP), a next-generation NodeB (next-generation NodeB, gNB) in a fifth-generation (5th generation, 5G) mobile communication system, a next-generation base station in a sixth-generation (6th generation, 6G) mobile communication system, a base station in a future mobile communication system, an access node in a Wi-Fi system, or the like; or may be a module or a unit that performs some functions of a base station, for example, may be a central unit (central unit, CU) or a distributed unit (distributed unit, DU). The CU herein performs functions of a radio resource control protocol and a packet data convergence protocol (packet data convergence protocol, PDCP) of the base station, and may further perform a function of a service data adaptation protocol (service data adaptation protocol, SDAP). The DU performs functions of a radio link control layer and a medium access control (medium access control, MAC) layer of the base station, and may further perform some or all functions of a physical layer. For specific descriptions of the foregoing protocol layers, refer to related technical specifications of the 3rd generation partnership project (3rd generation partnership project, 3GPP). The network device may be a macro base station (for example, 110a in FIG. 1(a)), or may be a micro base station or an indoor base station (for example, 110b in FIG. 1(a)), or may be a relay node, a donor node, or the like. A specific technology and a specific device form that are used for the network device are not limited in embodiments of this application. For ease of description, an example in which a base station serves as the network device is used below for description.

The terminal device is a device with a wireless transceiver function, and may send a signal to the base station, or receive a signal from the base station. The terminal device includes but is not limited to a terminal apparatus, a terminal, a user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be specifically a mobile phone, a tablet computer, a computer with a wireless transceiver function, a wearable device, a vehicle, an airplane, a ship, a robot, a robotic arm, a smart home device, or the like. A specific technology and a specific device form that are used for the terminal device are not limited in embodiments of this application. For ease of description, an example in which a UE serves as the terminal device is used below for description.

The base station and the UE may be at fixed positions, or may be movable. The base station and the UE may be deployed on land, including an indoor or outdoor scenario and a handheld or vehicle-mounted scenario, or may be deployed on water, or may be deployed on an airplane, a balloon, or an artificial satellite. Application scenarios of the base station and the UE are not limited in embodiments of this application.

Roles of the base station and the UE may be relative roles. For example, a helicopter or an uncrewed aerial vehicle 120i in FIG. 1(a) may be configured as a mobile base station. For a UE 120j accessing the radio access network 100 through 120i, the UE 120i is a base station. However, for a first base station 10a, 120i is a UE. To be specific, 110a and 120i communicate with each other based on a radio air interface protocol. Certainly, 110a and 120i may alternatively communicate with each other based on an interface protocol between base stations. In this case, for 110a, 120i is also a base station. Therefore, both the base station and the UE may be collectively referred to as communication apparatuses. 110a and 110b in FIG. 1(a) may be referred to as communication apparatuses with a base station function. 120a to 120j in FIG. 1(a) may be referred to as communication apparatuses with a UE function.

Communication between the base station and the UE, between base stations, or between UEs may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the UE may alternatively be performed by a module (for example, a chip or a modem) in the UE, or may be performed by an apparatus including the function of the UE.

In this application, the base station sends a downlink signal or downlink information to the UE, where the downlink information is carried in a downlink channel; and the UE sends an uplink signal or uplink information to the base station, where the uplink information is carried in an uplink channel. To communicate with the base station, the UE needs to establish a wireless connection to a cell controlled by the base station. The cell to which the UE establishes the wireless connection is referred to as a serving cell of the UE.

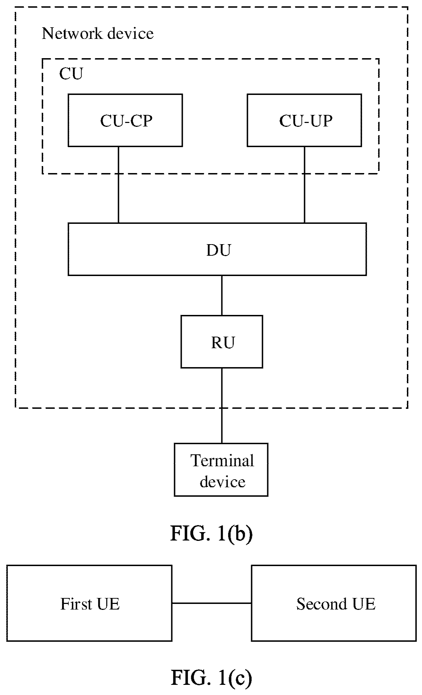

FIG. 1(b) is a diagram of a network device. As shown in FIG. 1(b), the network device includes one or more CUs, one or more DUs, and one or more radio units (radio unit, RU). For clarity, FIG. 1(b) shows only one CU, one DU, and one RU. The CU is configured to connect to a core network and the one or more DUs. Optionally, the CU may have some functions of the core network. The CU may include a CU-control plane (control plane, CP) and a CU-user plane (user plane, UP).

The CU and the DU may be configured based on functions, implemented by the CU and the DU, of protocol layers of a wireless network. For example, the CU is configured to implement functions of a packet data convergence protocol (packet data convergence protocol, PDCP) layer and an upper protocol layer (for example, a radio resource control (radio resource control, RRC) layer and/or a service data adaptation protocol (service data adaptation protocol, SDAP) layer), and the DU is configured to implement a function of a protocol layer (for example, a radio link control (radio link control, RLC) layer, a medium access control (medium access control, MAC) layer, and/or a physical (physical, PHY) layer) lower than the PDCP layer. For another example, the CU is configured to implement a function of a protocol layer (for example, an RRC layer and/or an SDAP layer) above a PDCP layer, and the DU is configured to implement functions of the PDCP layer and a lower protocol layer (for example, an RLC layer, a MAC layer, and/or a PHY layer).

The foregoing configurations of the CU and the DU are merely examples, and functions of the CU and the DU may alternatively be configured according to a requirement. For example, the CU or the DU may be configured to have functions of more protocol layers, or the CU or the DU may be configured to have some processing functions of a protocol layer. For example, some functions of the RLC layer and a function of a protocol layer above the RLC layer are deployed in the CU, and a remaining function of the RLC layer and a function of a protocol layer lower than the RLC layer are deployed in the DU. For another example, functions of the CU or the DU may alternatively be divided based on a service type or another system requirement. For example, division is performed based on a delay. A function whose processing time needs to meet a low-delay requirement is deployed in the DU, and a function that does not need to meet the delay requirement is deployed in the CU.

The DU and the RU may jointly implement a function of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement an upper-layer function of the PHY layer, and the RU is configured to implement a lower-layer function of the PHY layer, or implement the lower-layer function and a radio frequency function. The upper-layer function of the physical layer may include some functions of the physical layer, and these functions are closer to the MAC layer. The lower-layer function of the physical layer may include other functions of the physical layer, and these functions are closer to an intermediate radio frequency side.

FIG. 1(c) is a diagram of a communication system according to an embodiment of this application. The communication system includes a first UE and a second UE. The first UE and the second UE may be two UEs that communicate with each other in a vehicle-to-everything (Vehicle-To-Everything, V2X) or device-to-device (device-to-device, D2D) application. Both the first UE and the second UE in the communication system may be within a network coverage area; or one UE may be within a network coverage area, and the other UE is beyond the network coverage area; or both the first UE and the second UE may be beyond a network coverage area. This is not limited in this application.

In this application, an example in which a slot serves as a time unit is used for description, but the time unit is not limited to the slot; and an example in which a subchannel serves as a frequency domain unit is used for description, but the frequency domain unit is not limited to the subchannel.

For ease of understanding the solutions of this application, the following describes some nouns or terms in the solutions of this application.

### 1. Resource assignment mode

Rel-16 defines two resource assignment modes for a PC5 interface: a mode 1 (mode 1) and a mode 2 (mode 2).

In the mode 1, a base station assigns, through a Uu interface, transmission resources to two UEs that communicate with each other. Therefore, in the mode 1, a UE needs to be within a network coverage area.

In the mode 2, a UE autonomously selects a transmission resource from a configured resource pool. In the mode 2, a UE may be within a network coverage area or beyond a network coverage area.

In sidelink (sidelink, SL) communication, different resource pools may be assigned to the mode 1 and the mode 2, or the mode 1 and the mode 2 may share a resource pool. With a shared resource pool, resource utilization can be improved, but a resource conflict between the mode 1 and the mode 2 may also occur. Therefore, a UE in the mode 1 notifies a UE in the mode 2 of a resource assigned to future transmission of the UE in the mode 1. To be specific, the UE in the mode 1 notifies the UE in the mode 2 of a transmission resource reserved for the UE1. In this way, the UE in the mode 2 does not select the reserved transmission resource.

### 2. Resource configuration

Within a network coverage area, a UE may obtain SL resource pool (resource pool) configuration information and/or SL bandwidth part (bandwidth part, BWP) configuration information by receiving a system information block (system information block, SIB), cell-specific (cell-specific) radio resource control (Radio Resource Control, RRC) signaling, or user equipment-specific (UE-specific) RRC signaling from a base station. Alternatively, a UE may use preconfigured SL resource pool configuration information and/or preconfigured SL BWP configuration information.

The SL resource pool configuration information includes but is not limited to one or more of the following information (1) and (2).

### (1) Information about a resource in a resource pool

The information about a resource in a resource pool indicates an SL resource pool. The SL resource pool is a set of time-frequency resources used for sidelink communication between UEs.

The resource in the resource pool is used for a UE to send and receive at least one of the following channels: a physical sidelink control channel (Physical Sidelink Control Channel, PSCCH), a physical sidelink shared channel (Physical Sidelink Shared Channel, PSSCH), a physical sidelink data channel (Physical Sidelink Data Channel, PSDCH), a physical sidelink feedback channel (Physical Sidelink feedback Channel, PSFCH), and a physical sidelink broadcast channel (Physical Sidelink Broadcast Channel, PSBCH).

### (2) PSCCH configuration information

The PSCCH configuration information includes a quantity of symbols occupied by a PSCCH in a slot and a quantity of physical resource blocks (physical resource block, PRB) occupied by the PSCCH in a subchannel.

The SL BWP configuration information includes but is not limited to one or more of the following information (1) to (5).

### (1) SL resource pool information

The SL resource pool information is used for configuring a quantity of resource pools in a BWP.

### (2) SL bandwidth information

The SL bandwidth information indicates a bandwidth size for SL communication, for example, indicates that the bandwidth size is 20 megahertz (MHz).

### (3) SL symbol information

The SL symbol information indicates a starting SL symbol position in a slot and a quantity of consecutive SL symbols that are occupied.

### (4) SL subcarrier spacing (subcarrier spacing, SCS)

The SL subcarrier spacing indicates a subcarrier spacing used for SL communication.

### (5) Cyclic prefix information

The cyclic prefix information indicates a cyclic prefix used for SL communication, and the cyclic prefix may be an extended cyclic prefix or a normal cyclic prefix.

### 3. Sidelink control information (sidelink control information, SCI)

SCI of a new radio (new radio, NR) SL system includes first-stage SCI and second-stage SCI.

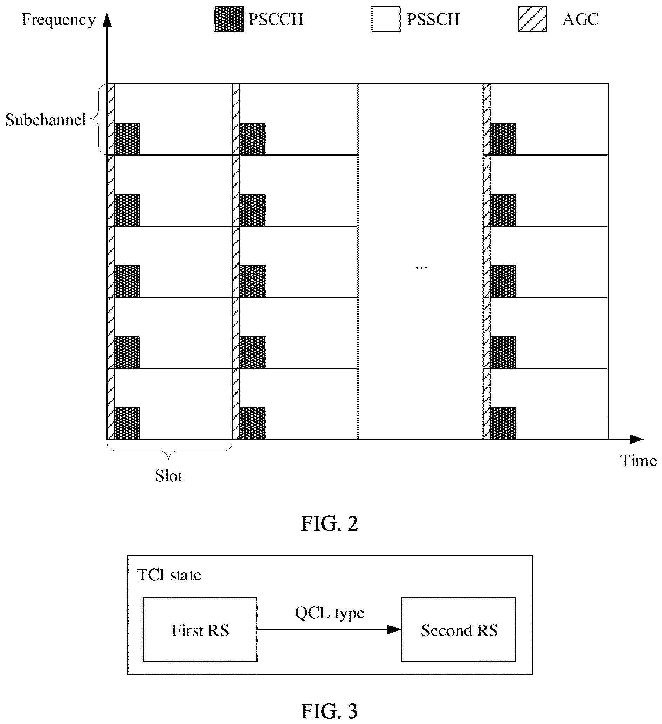

A PSCCH carries the first-stage SCI. The first-stage SCI is used to schedule the second-stage SCI and a PSSCH. Because SL is a distributed system, a UE can decode the second-stage SCI and the PSSCH only after correctly decoding the first-stage SCI. However, to reduce complexity of blind detection performed by the UE on the PSCCH, a resource position of the PSCCH is relatively fixed, and format information of the carried first-stage SCI is also relatively unique. To be specific, the UE does not need to perform blind detection on a time-frequency resource position of the PSCCH or perform blind detection on SCI in different formats, and the UE only needs to detect, at a fixed time-frequency resource position of the PSCCH, whether there is first-stage SCI. FIG. 2 is a diagram of time-frequency resources occupied by a PSCCH and a PSSCH. A PSCCH may exist in each subchannel in each slot. For example, a time domain starting position of a PSCCH is the 2^{nd} symbol for SL transmission in each slot, and a length is two or three symbols (determined based on resource pool configuration information); and a frequency domain position is a smallest PRB index (index) of each subchannel, and a length is at least 10 PRBs (determined based on the resource pool configuration information) but does not exceed a size of the subchannel.

A frequency resource assignment (Frequency resource assignment) field in the first-stage SCI indicates a frequency domain resource for PSSCH transmission. A time domain resource assignment (Time resource assignment) field in the first-stage SCI indicates a time domain resource for PSSCH transmission. A resource reservation period (Resource reservation period) field in the first-stage SCI indicates to periodically reserve a resource for PSSCH transmission. A value of the resource reservation period field is configured by a base station, or preconfigured, or predefined.

A second-stage SCI format is indicated by a second-stage SCI format (2nd-stage SCI format) field in the first-stage SCI. Table 1 shows examples of the second-stage SCI format.

**Table 1**

| Second-stage SCI format field | Second-stage SCI format |
|---|---|
| 00 | SCI format 2-A |
| 01 | SCI format 2-B |
| 10 | SCI format 2-C |
| 11 | Reserved (Reserved) |

Refer to Table 1. The second-stage SCI format field occupies 2 bits, and indicates three second-stage SCI formats.

### 4. Quasi co-located (Quasi Co-Located, QCL) and transmission configuration indicator (Transmission Configuration Indicator, TCI)

When a multiple-input multiple-output (multiple-input multiple-output, MIMO) technology is used, a receive-end device needs to be capable of distinguishing between different transmission and reception points (transmission and reception point, TRP), panels, or beams. Therefore, two important concepts are used in NR: QCL and TCI.

Before a definition of the QCL is provided, an antenna port (antenna port) needs to be first described. The antenna port is a logical concept widely used in a 3GPP protocol, and is defined as follows: A channel through which a signal on an antenna port passes may be derived from a channel through which another signal transmitted on the same antenna port passes. It should be noted that the antenna port is different from an actually used physical antenna. A plurality of physical antennas may correspond to one antenna port, and one physical antenna may correspond to a plurality of antenna ports.

Based on the antenna port, the QCL is defined as follows: If a characteristic of a channel through which a signal on an antenna port passes can be derived from a channel through which a signal on another antenna port passes, it is considered that the two antenna ports are QCL. In addition, reference signals (Reference Signal, RS) transmitted on the two antenna ports are in a QCL relationship.

In the NR, the transmission configuration indicator (Transmission Configuration Indicator, TCI) indicates a QCL relationship between two RSs, to be specific, a QCL relationship between antenna ports corresponding to two RSs. FIG. 3 is an example diagram of a QCL relationship. It is assumed that two RSs are a first RS and a second RS, and a base station configures a TCI state (TCI-State) for the first RS by using RRC signaling. A UE may determine, based on the TCI state, the second RS that has a QCL relationship with the first RS based on a specific QCL type (qcl-Type). The second RS may be a channel state information reference signal (Channel State Information Reference Signal, CSI-RS) or a synchronization signal block (synchronization signal block, SSB).

For signals from different TRPs, panels, or beams, after different TCI states are configured for the signals, the UE may determine a specific TRP, panel, or beam from which the signals come, or may determine signals that are from a same TRP, panel, or beam.

On a Uu interface, the base station configures a plurality of TCI states for the UE by using RRC signaling, and then indicates a TCI state of a specific RS by using a MAC CE and/or downlink control information (downlink control information, DCI).

For example, the following provides an example TCI state.

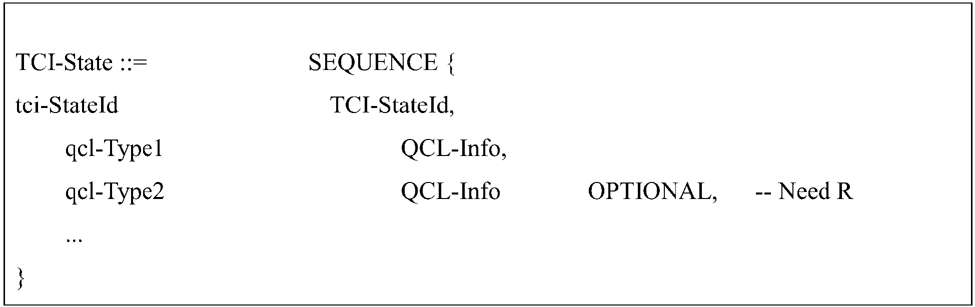

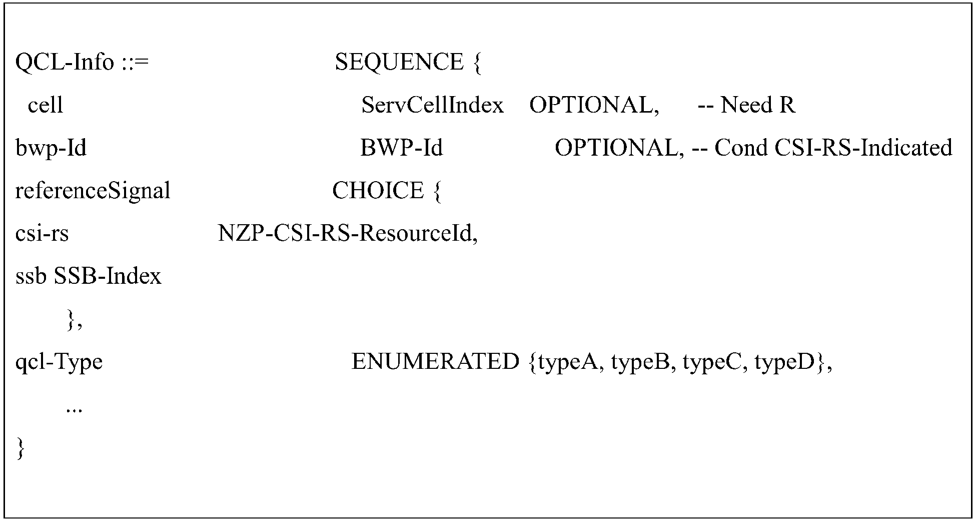

An information element (Information Element, IE) for configuring the TCI state in the RRC signaling includes two or three information elements, which are described as follows:
(1) tci-StateId: provides an identification (identification, ID) of the TCI state.
(2) qcl-Type1: provides a QCL relationship and a corresponding RS. The qcl-Type1 further points to a QCL-Info information element, and the QCL-Info information element provides a specific parameter of the QCL type.
(3) qcl-Type2: an optional information element, which provides another QCL relationship and a corresponding RS. The qcl-Type2 further points to a QCL-Info information element, and the QCL-Info information element provides a specific parameter of the QCL type.

The QCL-Info information element further includes two required information elements, which are described as follows:
(1) referenceSignal: provides an RS corresponding to a QCL relationship. The RS may be a CSI-RS resource with a specific ID, or an SSB with a specific number (index).
   It should be noted that a CSI-RS is represented as a CSI-RS resource, one CSI-RS resource corresponds to one CSI-RS configuration, and a configuration parameter includes a resource ID, a resource mapping, and the like. The resource mapping parameter further includes a quantity of ports, a frequency domain position, a time domain position, and the like.
(2) qcl-Type: provides a QCL type corresponding to a QCL relationship. The QCL type may be one of {typeA, typeB, typeC, typeD}.

A single QCL type corresponds to one or a combination of channel characteristics, and a possible channel characteristic includes a Doppler frequency shift, a Doppler spread, an average delay, a delay spread, a spatial reception parameter, and the like. A channel characteristic combination corresponding to each QCL type is briefly described as follows: typeA: {Doppler frequency shift, Doppler spread, average delay, delay spread}; typeB: {Doppler frequency shift, Doppler spread}; typeC: {Doppler frequency shift, average delay}; and typeD: {spatial reception parameter}. When two antenna ports are in a QCL relationship based on a specific QCL type, it is considered that characteristics of channels through which signals on the two antenna ports pass are the same as a channel characteristic corresponding to the QCL type. The typeD is used as an example. This QCL type corresponds to only the spatial reception parameter. Therefore, when two antenna ports are in a QCL relationship based on the typeD, it is considered that channels through which signals on the two antenna ports pass have a same spatial reception parameter.

According to the foregoing TCI state configuration method, the base station configures and indicates TCI states for the following RSs:
(1) Physical downlink shared channel (Physical Downlink Shared Channel, PDSCH) demodulation reference signal (Demodulation Reference Signal, DMRS): The base station configures a maximum of 128 TCI states by using RRC signaling. The base station activates a maximum of eight TCI states by using a MAC CE. The base station indicates a TCI state of the PDSCH DMRS by using 3 bits in DCI. In this way, the UE determines a QCL relationship between the PDSCH DMRS and another CSI-RS or SSB.
(2) Physical downlink control channel (Physical Downlink Control Channel, PDCCH) DMRS: The base station configures a maximum of 64 TCI states by using RRC signaling. The base station indicates a TCI state of the PDCCH DMRS by using a MAC CE. In this way, the UE determines a QCL relationship between the PDCCH DMRS and another CSI-RS or SSB.
(3) Aperiodic CSI-RS: The base station configures a TCI state of each CSI-RS resource in each CSI-RS resource set by using RRC signaling. The base station selects a CSI-RS resource set by using a MAC CE and DCI. In this way, the UE determines a TCI state of each CSI-RS resource in an aperiodic CSI-RS resource set.

### 5. Beam management

A beam (beam) and a beam pair (beam pair link, BPL) are introduced in a communication system. The beam is a communication resource. Beams may be classified into a transmit beam (also referred to as a transmitter beam) and a receive beam. A technology for forming a beam may be a beamforming technology or another technical means. Beamforming includes transmit beamforming and receive beamforming.

A transmit beam is a spatially directional beam formed by a signal sent by a transmit-end device (also referred to as a transmitter-end device) by using a specific beamforming weight. In an uplink direction, the transmit-end device may be a terminal. In a downlink direction, the transmit-end device may be a network device.

A receive beam is a spatially directional beam formed by a signal received by a receive-end device by using a specific beamforming weight. In an uplink direction, the receive-end device may be a network device. In a downlink direction, the receive-end device may be a terminal.

Transmit beamforming: When a transmit-end device with an antenna array sends a signal, a specific amplitude and phase are set on each antenna element of the antenna array, so that the sent signal has specific spatial directivity. To be specific, the signal has high signal power in some directions, and has low signal power in some other directions. A direction with highest signal power is a direction of a transmit beam. The antenna array includes a plurality of antenna elements. An applied specific amplitude and phase are a beamforming weight.

Receive beamforming: When a receive-end device with an antenna array receives a signal, a specific amplitude and phase are set on each antenna element of the antenna array, so that a power gain of the received signal is directional. To be specific, a power gain is high when a signal is received in some directions, and a power gain is low when a signal is received in some other directions. A direction with a highest power gain during signal reception is a direction of a receive beam. The antenna array includes a plurality of antenna elements. An applied specific amplitude and phase are a beamforming weight.

Sending a signal by using a specific transmit beam means sending the signal by using a specific beamforming weight.

Receiving a signal by using a receive beam means receiving the signal by using a specific beamforming weight.

Different beams may be considered as different resources. Same information or different information may be sent by using (or through) different beams. A beam pair is established based on the concept of a beam. One beam pair usually includes one transmit beam of a transmit-end device and one receive beam of a receive-end device. It should be noted that, in the following descriptions, a transmit beam is a transmit beam of a network device, and a receive beam is a receive beam of a terminal device, unless otherwise specified.

In a communication system, for example, a 5G new radio (new radio, NR) system, both a network device and a terminal device may generate one or more transmit beams and one or more receive beams. Before data is transmitted, beam alignment needs to be performed.

The beam management is an important technology proposed in 5G NR for a frequency range 2 (Frequency ranges 2, FR2), and is a process in which a base station and a UE obtain and maintain a beam set for transmission and reception. Definitions of a frequency range 1 (Frequency ranges 1, FR1) and the FR2 are shown in Table 2.

**Table 2**

| Frequency range name | Frequency range |
|---|---|
| FR1 | 410 MHz to 7125 MHz |
| FR2 | 24250 MHz to 52600 MHz |

For the FR2, the beam management includes two important functions: beam training and beam failure recovery. The beam training includes transmit beam training and receive beam training, and may be divided into three steps. Operations of the steps are summarized as follows:
Step 1: A base station sends a reference signal (Reference Signal, RS) based on a transmit beam set, where transmit beams in the set correspond to different transmit directions, and a UE selects a transmit beam of the gNB and a receive beam of the UE through beam measurement and feedback.
Step 2: Based on step 1, the base station sends an RS based on a smaller transmit beam set, and the UE performs beam measurement and feedback to improve the transmit beam of the base station.
Step 3: The base station sends an RS by using a transmit beam, and the UE performs beam measurement to improve the receive beam of the UE.

Based on the foregoing three steps, downlink beam training of the base station is performed. Particularly, in step 1 of the beam training, a possible RS is an SSB. Therefore, the base station configures a maximum of 64 transmit beams, and each beam corresponds to one SSB and a time-frequency resource that the UE should use for feedback. The base station sequentially sends SSBs on the beams in a sweeping manner, and the UE performs measurement to obtain reference signal received power (reference signal received power, RSRP) of the SSBs and performs feedback.

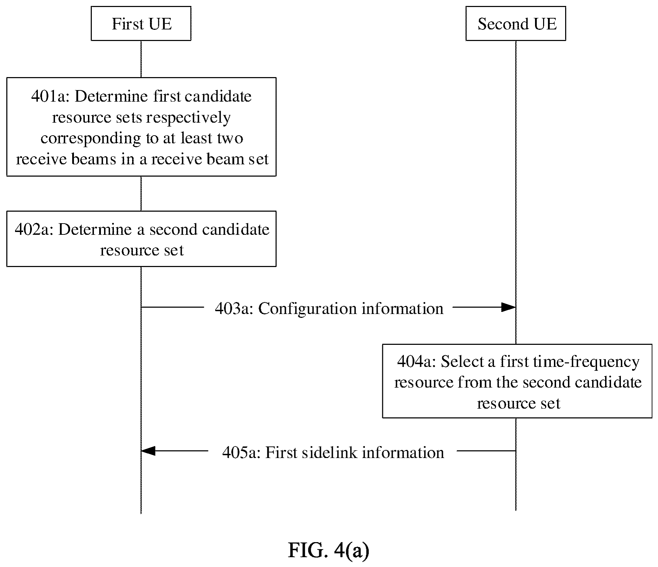

FIG. 4(a) is a schematic flowchart of a communication method according to an embodiment of this application. This embodiment is applicable to a mode 2 (mode 2) in SL communication, and a frequency range of a resource used for communication is an FR2. A reason is as follows: The FR2 is a high frequency band, and on this frequency band, a beam direction is distinguished, and a beam management procedure is present. Therefore, the foregoing problem of improving utilization of a space domain resource of a beam and communication quality exists. However, an FR1 is a low frequency band, and on this frequency band, no beam direction is distinguished, and no beam management procedure is present. Therefore, the foregoing problem does not exist.

In the embodiment of FIG. 4(a), a transmit beam set includes one or more transmit beams, and each transmit beam corresponds to one reference signal. The transmit beam set is a set of beams available for a second UE to send sidelink information in all directions. For example, the transmit beam set is {beam 1, beam 2, ..., beam m}, where m is a positive integer.

In the embodiment of FIG. 4(a), a receive beam set includes a plurality of receive beams. The receive beam set is a set of beams available for a first UE to receive sidelink information in all directions. For example, the receive beam set is {beam 1, beam 2, ..., beam n}, where n is an integer greater than 1.

In this embodiment, the second UE serves as a transmit end, and is also referred to as a transmit-end UE; and the first UE serves as a receive end, and is also referred to as a receive-end UE. For example, the first UE and the second UE perform the method. The method includes the following steps.

Step 401a: The first UE determines first candidate resource sets respectively corresponding to at least two receive beams in the receive beam set.

Specifically, the first UE first determines the at least two receive beams in the receive beam set, and then determines the first candidate resource sets respectively corresponding to the at least two receive beams.

That the first UE determines the first candidate resource sets respectively corresponding to the at least two receive beams may be as follows: For each of the at least two receive beams, the first UE excludes a first resource from a resource selection window corresponding to each receive beam, to obtain a first candidate resource set corresponding to each receive beam, where the first resource includes a periodic resource that is within the resource selection window and that corresponds to an unsensed slot in a sensing window corresponding to each receive beam. The first resource may be a time-frequency resource reserved for use by another UE. Therefore, the first resource is excluded from the first candidate resource set, to avoid a resource conflict during selection of a time-frequency resource. For example, it is assumed that the at least two receive beams determined by the first UE include receive beams 1 to 3. For the receive beam 1, the first UE excludes a first resource from a resource selection window corresponding to the receive beam 1, to obtain a first candidate resource set corresponding to the receive beam 1. The first resource includes a periodic resource that is within the resource selection window and that corresponds to an unsensed slot in a sensing window corresponding to the receive beam 1. For a receive beam 2, the first UE excludes a first resource from a resource selection window corresponding to the receive beam 2, to obtain a first candidate resource set corresponding to the receive beam 2, where the first resource includes a periodic resource that is within the resource selection window and that corresponds to an unsensed slot in a sensing window corresponding to the receive beam 2. For a receive beam 3, the first UE excludes a first resource from a resource selection window corresponding to the receive beam 3, to obtain a first candidate resource set corresponding to the receive beam 3, where the first resource includes a periodic resource that is within the resource selection window and that corresponds to an unsensed slot in a sensing window corresponding to the receive beam 3.

In an implementation method, that the first UE determines the at least two receive beams in the receive beam set may be as follows: The first UE receives at least one reference signal from the second UE, and then determines the at least two receive beams in the receive beam set based on the at least one reference signal, where RSRP measurement results, for the reference signal, that respectively correspond to the at least two receive beams are greater than an RSRP threshold. The reference signal may be a sidelink synchronization signal block (sidelink synchronization signal block, SL-SSB) or an SL CSI-RS. One reference signal corresponds to one transmit beam of the second UE. For example, if a transmit beam set sent by the second UE includes eight transmit beams, the eight transmit beams are in a one-to-one correspondence with eight reference signals, and each transmit beam may be used to send one reference signal. The following provides descriptions in two cases.

Case 1: The at least one reference signal sent by the second UE includes only one reference signal.

Based on the case 1, the first UE determines the at least two receive beams based on RSRP measurement results obtained when the reference signal is received separately by using receive beams in the receive beam set, where RSRP measurement results, for the reference signal, that respectively correspond to the at least two receive beams are greater than the RSRP threshold. For example, the second UE sends one reference signal through one transmit beam, and the first UE receives the reference signal by using a receive beam set. The receive beam set includes eight receive beams: receive beams 1 to 8. If RSRP measurement results, for the reference signal, measured by the first UE when the first UE receives the reference signal separately by using the receive beams 1 to 3 each are greater than the RSRP threshold, and RSRP measurement results, for the reference signal, measured by the first UE when the first UE receives the reference signal separately by using the receive beams 4 to 8 each are less than the RSRP threshold, the at least two receive beams determined by the first UE include the receive beams 1 to 3.

Based on the case 1, the first UE may further determine a transmit beam in the transmit beam set based on the reference signal, where the transmit beam set includes a transmit beam of the second UE, the transmit beam corresponds to the reference signal, the reference signal is sent through the transmit beam, and an RSRP measurement result for a receive beam corresponding to the transmit beam is greater than the RSRP threshold. Alternatively, the first UE may determine a first reference signal in a reference signal set based on the reference signal, where the reference signal set includes a reference signal of the second terminal device, and an RSRP measurement result for a receive beam corresponding to the first reference signal is greater than the RSRP threshold. Then the second UE determines a corresponding transmit beam based on the first reference signal.

Optionally, after determining the transmit beam, the first UE may further send indication information to the second UE, where the indication information indicates the transmit beam, so that the second UE subsequently sends sidelink information to the first UE on the transmit beam. For example, the indication information is identification information of an SL TCI state, the identification information of the SL TCI state corresponds to a first signal, and the first signal corresponds to the transmit beam. The first signal may be an SL-SSB or an SL CSI-RS.

Alternatively, after determining the transmit beam, the first UE may send indication information to the second UE, where the indication information indicates the at least two receive beams in the receive beam set. Subsequently, the second UE determines, based on the indicated at least two receive beams, a transmit beam that should be used. In this way, a transmit beam can be accurately determined.

Case 2: The at least one reference signal sent by the second UE includes at least two reference signals.

Based on the case 2, the first UE determines, based on RSRP measurement results obtained when the at least two reference signals are received separately by using receive beams in the receive beam set, at least two target receive beams that are in the receive beam set and that respectively correspond to the at least two reference signals, where RSRP measurement results, for the reference signals, that respectively correspond to the at least two target receive beams are greater than the RSRP threshold; and the first UE determines, as the at least two receive beams, an intersection set between the at least two target receive beams that are in the receive beam set and that respectively correspond to the at least two reference signals.

For example, the second UE sends three reference signals through three transmit beams, where the three transmit beams are transmit beams 1 to 3, and the three reference signals are a reference signal 1, a reference signal 2, and a reference signal 3. The reference signal 1 is sent through the transmit beam 1, the reference signal 2 is sent through the transmit beam 2, and the reference signal 3 is sent through the transmit beam 3. The first UE separately receives the reference signals 1 to 3 by using a receive beam set. The receive beam set includes eight receive beams: receive beams 1 to 8.

For the reference signal 1, assuming that RSRP measurement results, for the reference signal 1, measured by the first UE when the first UE receives the reference signal 1 separately by using the receive beams 1 to 3 each are greater than the RSRP threshold, and RSRP measurement results, for the reference signal 1, measured by the first UE when the first UE receives the reference signal 1 separately by using the receive beams 4 to 8 each are less than the RSRP threshold, at least two target receive beams that correspond to the reference signal 1 and that are determined by the first UE include the receive beams 1 to 3.

For the reference signal 2, assuming that RSRP measurement results, for the reference signal 2, measured by the first UE when the first UE receives the reference signal 2 separately by using the receive beams 1 to 4 each are greater than the RSRP threshold, and RSRP measurement results, for the reference signal 2, measured by the first UE when the first UE receives the reference signal 2 separately by using the receive beams 5 to 8 each are less than the RSRP threshold, at least two target receive beams that correspond to the reference signal 2 and that are determined by the first UE include the receive beams 1 to 4.

For the reference signal 3, assuming that RSRP measurement results, for the reference signal 3, measured by the first UE when the first UE receives the reference signal 3 separately by using the receive beams 1 to 5 each are greater than the RSRP threshold, and RSRP measurement results, for the reference signal 3, measured by the first UE when the first UE receives the reference signal 3 separately by using the receive beams 6 to 8 each are less than the RSRP threshold, at least two target receive beams that correspond to the reference signal 3 and that are determined by the first UE include the receive beams 1 to 5.

Further, the first UE determines an intersection set between the at least two target receive beams that are in the receive beam set and that respectively correspond to the three reference signals, to be specific, determines an intersection set between the receive beams 1 to 3 corresponding to the reference signal 1, the receive beams 1 to 4 corresponding to the reference signal 2, and the receive beams 1 to 5 corresponding to the reference signal 3. Therefore, the intersection set includes the receive beams 1 to 3. To be specific, in step 402a, the first UE determines, based on the three reference signals, that the at least two receive beams in the receive beam set include the receive beams 1 to 3.

Based on the case 2, the first UE may further determine at least two transmit beams in the transmit beam set based on the at least two reference signals, where the transmit beam set includes a transmit beam of the second UE, the at least two transmit beams are in a one-to-one correspondence with the at least two reference signals, and RSRP measurement results for receive beams corresponding to the at least two transmit beams are greater than the RSRP threshold. Alternatively, the first UE may determine at least two first reference signals in a reference signal set based on the two reference signals, where the reference signal set includes a reference signal of the second terminal device, and RSRP measurement results for receive beams corresponding to the at least two first reference signals are greater than the RSRP threshold. Then the second UE determines at least two corresponding transmit beams based on the at least two first reference signals.

Optionally, after determining the at least two transmit beams, the first UE may further send indication information to the second UE, where the indication information indicates the at least two transmit beams, so that the second UE subsequently sends sidelink information to the first UE on the at least two transmit beams. For example, the indication information is identification information of an SL TCI state, the identification information of the SL TCI state corresponds to at least two first signals, and the at least two first signals are in a one-to-one correspondence with the at least two transmit beams. The first signal may be an SL-SSB or an SL CSI-RS.

Alternatively, after determining the at least two transmit beams, the first UE may send indication information to the second UE, where the indication information indicates the at least two receive beams in the receive beam set. Subsequently, the second UE determines, based on the indicated at least two receive beams, at least two transmit beams that should be used. In this way, a transmit beam can be accurately determined.

It should be noted that a specific manner of determining, by the first UE, the at least two receive beams in the receive beam set is not limited in this embodiment of this application. For example, in another implementation method, the first UE may alternatively randomly select the at least two receive beams from the receive beam set.

Step 402a: The first UE determines a second candidate resource set, where the second candidate resource set is an intersection set between the first candidate resource sets respectively corresponding to the at least two receive beams.

The second candidate resource set is used to receive sidelink information from the second UE, or is understood as being used for the second UE to send sidelink information to the first UE on a time-frequency resource in the second candidate resource set. For example, if the at least two receive beams determined by the first UE include receive beams 1 to 3, the first UE first determines a first candidate resource set (denoted as X1) corresponding to the receive beam 1, determines a first candidate resource set (denoted as X2) corresponding to the receive beam 2, and determines a first candidate resource set (denoted as X3) corresponding to the receive beam 3, and then determines an intersection set between X1, X2, and X3. To be specific, the determined intersection set is a common time-frequency resource between X1, X2, and X3.

Step 403a: The first UE sends configuration information to the second UE, and the second UE receives the configuration information.

In an implementation method, the configuration information is carried in SCI and/or a MAC CE.

The configuration information indicates the second candidate resource set.

In an implementation method, the configuration information includes the second candidate resource set. In another implementation method, the configuration information includes position information of a time-frequency resource in the second candidate resource set.

In an implementation method, when sending the configuration information to the second UE, the first UE further sends indication information, where the indication information indicates at least one transmit beam in the transmit beam set, and the indication information may be identification information of an SL TCI state. Therefore, the second UE may determine a candidate resource set indicated by the configuration information, and determine at least one transmit beam, corresponding to the candidate resource set, of the second UE.

In another implementation method, when sending the configuration information to the second UE, the first UE further sends indication information, where the indication information indicates at least two receive beams in the receive beam set, and the indication information may be identification information of an SL TCI state. Therefore, the second UE may determine a candidate resource set indicated by the configuration information, and determine at least two receive beams, corresponding to the candidate resource set, of the first UE, and may further determine at least one transmit beam, corresponding to the at least two receive beams, of the second UE.

Step 404a: The second UE selects a first time-frequency resource from the second candidate resource set.

The first time-frequency resource is some or all time-frequency resources in the second candidate resource set.

For example, the second UE selects the first time-frequency resource from a currently unused time-frequency resource in the second candidate resource set, for example, may perform random selection, or may perform selection based on a preset algorithm. This is not limited in this application.

Step 405a: The second UE sends first sidelink information to the first UE on the first time-frequency resource. Correspondingly, the first UE receives the first sidelink information.

The second UE selects the first time-frequency resource from the second candidate resource set to send sidelink information to the first UE, and the first time-frequency resource is included in the first candidate resource sets respectively corresponding to the at least two receive beams. Therefore, the first UE may receive the first sidelink information through any one of the at least two receive beams.

In an implementation method, the first UE receives the first sidelink information from the second UE through a first receive beam of the at least two receive beams. For example, an RSRP measurement result corresponding to the first receive beam is a highest one of the RSRP measurement results corresponding to the at least two receive beams. For another example, the first receive beam is any one of the at least two receive beams.

The first UE may receive sidelink information from the second UE through any one of the at least two receive beams. Therefore, when the first receive beam is subject to interference, the first UE may switch to a second receive beam of the at least two receive beams to receive second sidelink information from the second UE, where the second receive beam is different from the first receive beam.

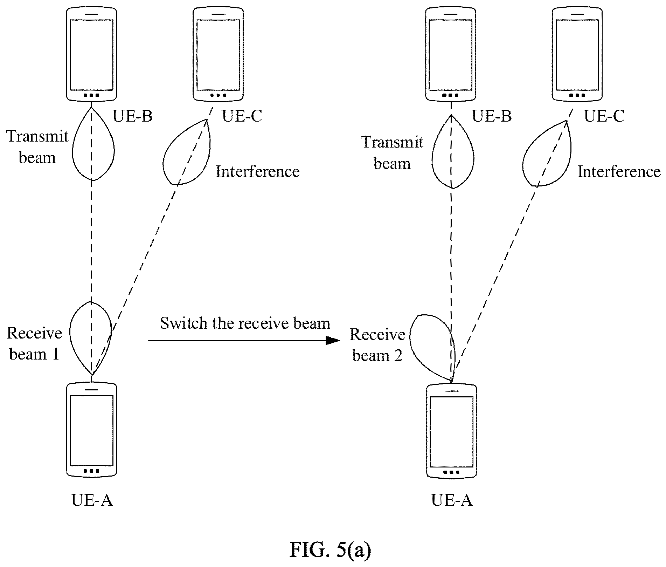

The following provides descriptions by using an example. FIG. 5(a) is a diagram of beam interference. A UE-B is a transmit-end UE. To be specific, the UE-B is an example of the foregoing second UE. A UE-A is a receive-end UE. To be specific, the UE-A is an example of the foregoing first UE. It is assumed that at least two receive beams determined by the UE-A include receive beams 1 to 3. The UE-B selects a time-frequency resource from the second candidate resource set, and sends sidelink information to the UE-A on the time-frequency resource. When the UE-A performs reception by using the receive beam 1, if the UE-A is subject to interference from a beam of a UE-C, the UE-A may choose to switch to the receive beam 2 for reception. When it is ensured that the UE-A can receive a transmit beam of the UE-B, interference from the UE-C is reduced. In this way, a space domain resource of a beam is effectively utilized, and communication quality is improved.

In an implementation method, the second UE sends the first sidelink information to the first UE on the first time-frequency resource through a first transmit beam of the at least one transmit beam, where the at least one transmit beam is a transmit beam indicated by the indication information sent by the first UE to the second UE, and an RSRP measurement result for a receive beam corresponding to the at least one transmit beam is greater than the RSRP threshold. An RSRP measurement result for a receive beam corresponding to the first transmit beam may be a highest one of the RSRP measurement result for the receive beam corresponding to the at least one transmit beam. Alternatively, the first transmit beam is any one of the at least one transmit beam.

Because the RSRP measurement result for the receive beam corresponding to the at least one transmit beam is greater than the RSRP threshold, the second UE may send sidelink information to the first UE through any one of the at least one transmit beam. When the first transmit beam is subject to interference or fails to perform transmission (for example, a negative acknowledgement feedback is received, or no feedback is received), the second UE may switch to a second transmit beam of the at least one transmit beam to send the second sidelink information to the first UE, where the second transmit beam is different from the first transmit beam. Specifically, the second UE selects a second time-frequency resource from the second candidate resource set, and sends the second sidelink information to the first UE on the second time-frequency resource through the second transmit beam of the at least one transmit beam.

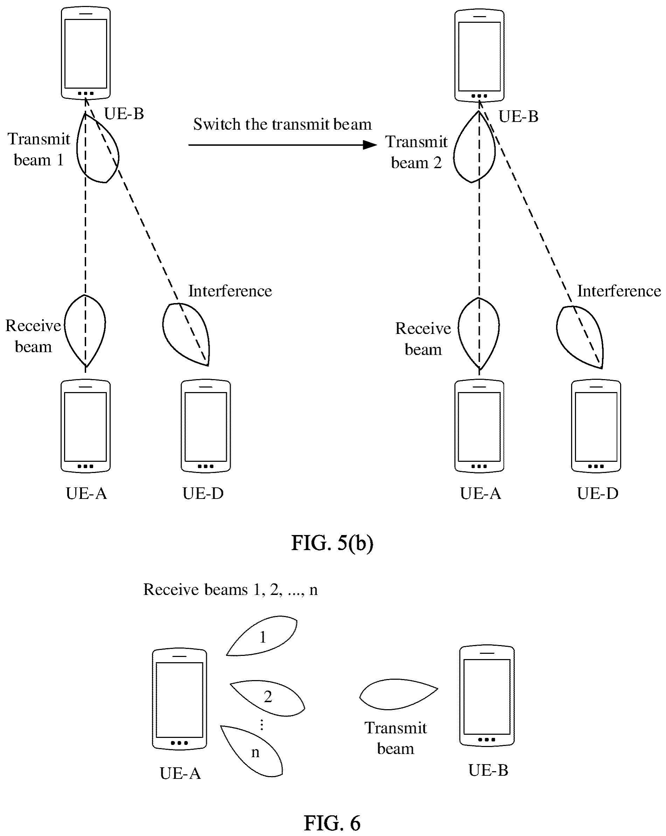

The following provides descriptions by using an example. FIG. 5(b) is another diagram of beam interference. A UE-B is a transmit-end UE. To be specific, the UE-B is an example of the foregoing second UE. A UE-A is a receive-end UE. To be specific, the UE-A is an example of the foregoing first UE. It is assumed that the indication information sent by the first UE to the second UE indicates transmit beams 1 to 3. The UE-B selects a time-frequency resource from a second candidate resource set sent by the UE-A, and sends sidelink information to the UE-A on the time-frequency resource. When the UE-B performs transmission by using the transmit beam 1, if the UE-B is subject to interference from a beam of a UE-D, the UE-B may choose to switch to the transmit beam 2 for transmission. When it is ensured that the UE-A can receive a transmit beam of the UE-B, interference from the UE-D is reduced. In this way, a space domain resource of a beam is effectively utilized, and communication quality is improved.

In the foregoing solution, during beam matching/beam measurement, a receive-end UE (namely, the first UE) determines a plurality of receive beams, obtains an intersection set (namely, the second candidate resource set) between candidate resource sets of the plurality of receive beams, and then indicates the intersection set to a transmit-end UE (namely, the second UE) by using configuration information. When the transmit-end UE sends sidelink information to the receive-end UE by using a time-frequency resource in the intersection set, the receive-end UE may select one of the plurality of receive beams for reception. When the receive beam is subject to interference, the receive-end UE may reselect one of the plurality of receive beams for reception. In addition, the transmit-end UE may select one of a plurality of transmit beams for transmission. When the transmit beam is subject to interference, the transmit-end UE may reselect one of the plurality of transmit beams for transmission. Therefore, in this solution, possible interference caused by a single beam direction (a transmit beam direction and/or a receive beam direction) can be reduced, to effectively utilize a space domain resource of a beam and improve communication quality.

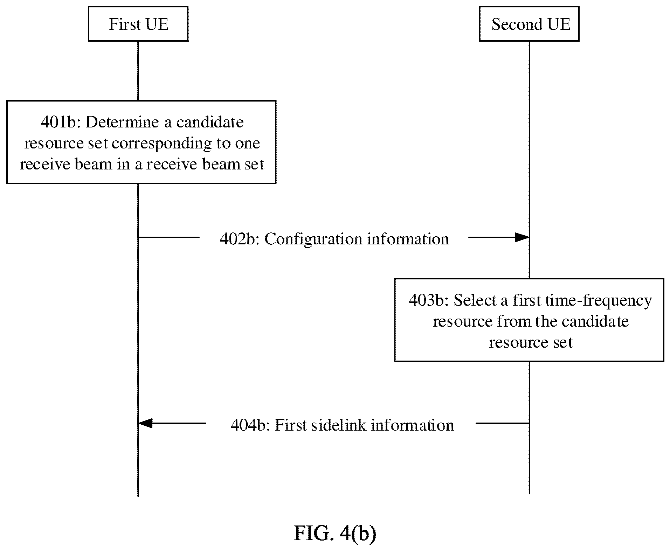

FIG. 4(b) is a schematic flowchart of a communication method according to an embodiment of this application. This embodiment is applicable to a mode 2 (mode 2) in SL communication, and a frequency range of a resource used for communication is an FR2. For a reason, refer to the descriptions in the embodiment of FIG. 4(a).

In the embodiment of FIG. 4(b), a transmit beam set includes a plurality of transmit beams, and each transmit beam corresponds to one reference signal. The transmit beam set is a set of beams available for a second UE to send sidelink information in all directions. For example, the transmit beam set is {beam 1, beam 2, ..., beam m}, where m is an integer greater than 1.

In the embodiment of FIG. 4(b), a receive beam set includes one or more receive beams. The receive beam set is a set of beams available for a first UE to receive sidelink information in all directions. For example, the receive beam set is {beam 1, beam 2, ..., beam n}, where n is a positive integer.

In this embodiment, the second UE serves as a transmit end, and is also referred to as a transmit-end UE; and the first UE serves as a receive end, and is also referred to as a receive-end UE. For example, the first UE and the second UE perform the method. The method includes the following steps.

Step 401b: The first UE determines a candidate resource set corresponding to one receive beam in the receive beam set.

Specifically, the first UE first determines one receive beam in the receive beam set, and then determines a candidate resource set corresponding to the receive beam.

Specifically, that the first UE determines the candidate resource set corresponding to the receive beam may be as follows: The first UE excludes a first resource from a resource selection window corresponding to the receive beam, to obtain the candidate resource set corresponding to the receive beam. The first resource includes a periodic resource that is within the resource selection window and that corresponds to an unsensed slot in a sensing window corresponding to the receive beam.

In an implementation method, that the first UE determines one receive beam in the receive beam set may be as follows: The first UE receives at least two reference signals from the second UE, and then determines one receive beam in the receive beam set based on the at least two reference signals, where RSRP measurement results, for the reference signals, that correspond to the receive beam are greater than an RSRP threshold. The reference signal may be an SL-SSB or an SL CSI-RS. One reference signal corresponds to one transmit beam of the second UE. For example, if a transmit beam set sent by the second UE includes eight transmit beams, the eight transmit beams are in a one-to-one correspondence with eight reference signals, and each transmit beam may be used to send one reference signal. Specifically, the first UE determines, based on RSRP measurement results obtained when the at least two reference signals are received separately by using receive beams in the receive beam set, at least one target receive beam that is in the receive beam set and that respectively corresponds to the at least two reference signals, where RSRP measurement results, for the reference signals, that respectively correspond to the at least one target receive beam are greater than the RSRP threshold; and the first UE determines, as the receive beam, an intersection set between the at least one target receive beam that is in the receive beam set and that respectively corresponds to the at least two reference signals.

For example, the second UE sends three reference signals through three transmit beams, where the three transmit beams are transmit beams 1 to 3, and the three reference signals are a reference signal 1, a reference signal 2, and a reference signal 3. The reference signal 1 is sent through the transmit beam 1, the reference signal 2 is sent through the transmit beam 2, and the reference signal 3 is sent through the transmit beam 3. The first UE separately receives the reference signals 1 to 3 by using a receive beam set. The receive beam set includes eight receive beams: receive beams 1 to 8.

For the reference signal 1, assuming that RSRP measurement results, for the reference signal 1, measured by the first UE when the first UE receives the reference signal 1 separately by using the receive beams 1 to 3 each are greater than the RSRP threshold, and RSRP measurement results, for the reference signal 1, measured by the first UE when the first UE receives the reference signal 1 separately by using the receive beams 4 to 8 each are less than the RSRP threshold, at least two target receive beams that correspond to the reference signal 1 and that are determined by the first UE include the receive beams 1 to 3.

For the reference signal 2, assuming that RSRP measurement results, for the reference signal 2, measured by the first UE when the first UE receives the reference signal 2 separately by using the receive beams 1 and 2 each are greater than the RSRP threshold, and RSRP measurement results, for the reference signal 2, measured by the first UE when the first UE receives the reference signal 2 separately by using the receive beams 3 to 8 each are less than the RSRP threshold, at least two target receive beams that correspond to the reference signal 2 and that are determined by the first UE include the receive beams 1 and 2.

For the reference signal 3, assuming that an RSRP measurement result, for the reference signal 3, measured by the first UE when the first UE receives the reference signal 3 by using the receive beam 1 is greater than the RSRP threshold, and RSRP measurement results, for the reference signal 3, measured by the first UE when the first UE receives the reference signal 3 separately by using the receive beams 2 to 8 each are less than the RSRP threshold, at least two target receive beams that correspond to the reference signal 3 and that are determined by the first UE include the receive beam 1.

Further, the first UE determines an intersection set between the at least one target receive beam, in the receive beam set, that respectively corresponds to the three reference signals, to be specific, determines an intersection set between the receive beams 1 to 3 corresponding to the reference signal 1, the receive beams 1 and 2 corresponding to the reference signal 2, and the receive beam 1 corresponding to the reference signal 3. Therefore, the intersection set includes the receive beam 1. To be specific, in step 402b, the first UE determines, based on the three reference signals, that the receive beam in the receive beam set is the receive beam 1.

In an implementation method, the first UE may further determine at least two transmit beams in the transmit beam set based on the at least two reference signals, where the transmit beam set includes a transmit beam of the second UE, the at least two transmit beams are in a one-to-one correspondence with the at least two reference signals, and RSRP measurement results for receive beams corresponding to the at least two transmit beams are greater than the RSRP threshold. Alternatively, the first UE may determine at least two first reference signals in a reference signal set based on the two reference signals, where the reference signal set includes a reference signal of the second terminal device, and RSRP measurement results for receive beams corresponding to the at least two first reference signals are greater than the RSRP threshold. Then the second UE determines at least two corresponding transmit beams based on the at least two first reference signals.

Optionally, after determining the at least two transmit beams, the first UE may further send indication information to the second UE, where the indication information indicates the at least two transmit beams, so that the second UE subsequently sends sidelink information to the first UE on the at least two transmit beams. For example, the indication information is identification information of an SL TCI state, the identification information of the SL TCI state corresponds to at least two first signals, and the at least two first signals are in a one-to-one correspondence with the at least two transmit beams. The first signal may be an SL-SSB or an SL CSI-RS.

Alternatively, after determining the at least two transmit beams, the first UE may send indication information to the second UE, where the indication information indicates one receive beam in the receive beam set. Subsequently, the second UE determines, based on the indicated receive beam, at least two transmit beams that should be used. In this way, a transmit beam can be accurately determined.

It should be noted that a specific manner of determining, by the first UE, one receive beam in the receive beam set is not limited in this embodiment of this application. For example, in another implementation method, the first UE may alternatively randomly select one receive beam from the receive beam set.

Step 402b: The first UE sends configuration information to the second UE. Correspondingly, the second UE receives the configuration information.

In an implementation method, the configuration information is carried in SCI and/or a MAC CE.

The configuration information indicates a candidate resource set corresponding to the receive beam, and the candidate resource set is used for the second UE to send sidelink information to the first UE on a time-frequency resource in the candidate resource set.

In an implementation method, when sending the configuration information to the second UE, the first UE further sends indication information, where the indication information indicates at least two transmit beams in the transmit beam set, and the indication information may be identification information of an SL TCI state. Therefore, the second UE may determine a candidate resource set indicated by the configuration information, and determine at least two transmit beams, corresponding to the candidate resource set, of the second UE.

In another implementation method, when sending the configuration information to the second UE, the first UE further sends indication information, where the indication information indicates one receive beam in the receive beam set, and the indication information may be identification information of an SL TCI state. Therefore, the second UE may determine a candidate resource set indicated by the configuration information, and determine one receive beam, corresponding to the candidate resource set, of the first UE, and may further determine at least two transmit beams, corresponding to the receive beam, of the second UE.

Step 403b: The second UE selects a first time-frequency resource from the candidate resource set.

The first time-frequency resource is some or all time-frequency resources in the candidate resource set.

For example, the second UE selects the first time-frequency resource from a currently unused time-frequency resource in the second candidate resource set, for example, may perform random selection, or may perform selection based on a preset algorithm. This is not limited in this application.

Step 404b: The second UE sends first sidelink information to the first UE on the first time-frequency resource. Correspondingly, the first UE receives the first sidelink information.

Specifically, the first UE receives the first sidelink information from the second UE through the receive beam.

In an implementation method, the second UE sends the first sidelink information to the first UE on the first time-frequency resource through a first transmit beam of the at least one transmit beam, where the at least one transmit beam is a transmit beam indicated by the indication information sent by the first UE to the second UE, and an RSRP measurement result for a receive beam corresponding to the at least one transmit beam is greater than the RSRP threshold. An RSRP measurement result for a receive beam corresponding to the first transmit beam may be a highest one of the RSRP measurement result for the receive beam corresponding to the at least one transmit beam. Alternatively, the first transmit beam is any one of the at least one transmit beam.

Because the RSRP measurement result for the receive beam corresponding to the at least one transmit beam is greater than the RSRP threshold, the second UE may send sidelink information to the first UE through any one of the at least one transmit beam. When the first transmit beam is subject to interference, the second UE may switch to a second transmit beam of the at least one transmit beam to send the second sidelink information to the first UE, where the second transmit beam is different from the first transmit beam. Specifically, the second UE selects a second time-frequency resource from the intersection set, and sends the second sidelink information to the first UE on the second time-frequency resource through the second transmit beam of the at least one transmit beam.

For an example of switching a transmit beam, refer to the example in FIG. 5(b).

In the foregoing solution, during beam matching/beam measurement, a receive-end UE (namely, the first UE) determines one receive beam, and indicates, to a transmit-end UE (namely, the second UE) by using configuration information, a candidate resource set corresponding to the receive beam. When the transmit-end UE sends sidelink information to the receive-end UE by using a time-frequency resource in the candidate resource set, the transmit-end UE may select one of a plurality of transmit beams for transmission. When the transmit beam is subject to interference, the transmit-end UE may reselect one of the plurality of transmit beams for transmission. Therefore, in this solution, possible interference caused by a single beam direction can be reduced, to effectively utilize a space domain resource of a beam and improve communication quality.

A difference between the embodiment of FIG. 4(b) and the embodiment of FIG. 4(a) lies in the following: In the embodiment of FIG. 4(a), the second UE sends one or more transmit beams, and the first UE determines an intersection set between first candidate resource sets respectively corresponding to at least two receive beams, and indicates the intersection set to the second UE by using configuration information. In the embodiment of FIG. 4(b), the second UE sends a plurality of transmit beams, and the first UE determines a candidate resource set corresponding to one receive beam, and indicates the candidate resource set to the second UE by using configuration information.

The following describes the embodiments of FIG. 4(a) and FIG. 4(b) in detail with reference to Embodiment 1 to Embodiment 3. Embodiment 1 and Embodiment 3 are specific examples of the embodiment of FIG. 4(a), and Embodiment 2 is a specific example of the embodiment of FIG. 4(b). Embodiment 1 to Embodiment 3 are applicable to a mode 2 (mode 2) in SL communication, and a frequency range of a resource used for communication is an FR2. In Embodiment 1 to Embodiment 3, a reference signal sent in a transmit beam of a UE-B is an SL-SSB, referred to as an SSB below. The UE-B is a specific example of the second UE in the foregoing embodiments, and a UE-A is a specific example of the first UE in the foregoing embodiments.

### Embodiment 1

In Embodiment 1, a receive-end UE performs beam (beam) switching to avoid interference. FIG. 6 is an example diagram of beam sweeping. In this example, when a UE-B (namely, a transmit-end UE) has a fixed transmit beam, a UE-A (namely, the receive-end UE) performs beam sweeping on receive beams (a receive beam 1, a receive beam 2, ..., and a receive beam n, where n is an integer greater than 1). Therefore, in this embodiment, a receive beam set includes the receive beam 1, the receive beam 2, ..., and the receive beam n, and a transmit beam set includes one transmit beam. In the following, the receive beams in the receive beam set are referred to as beams of the UE-A, for example, a beam i, a beam j, and a beam k of the UE-A, and the transmit beam in the transmit beam set is referred to as a beam of the UE-B.

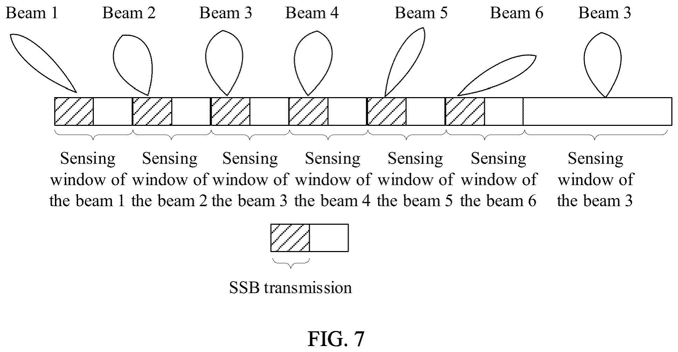

In Embodiment 1, sweeping time in each beam direction is defined as a sensing window of the beam. FIG. 7 is an example diagram of a sensing window. The sensing window includes SSB transmission time of a beam in a corresponding direction. If it is determined, after an SSB sweeping process ends, that a beam 3 is an optimal beam direction, when the beam 3 is subsequently used for reception/transmission, time corresponding to the beam 3 is a sensing window of the beam 3. A specific time position, for example, a beam transmission periodicity or pattern (to be specific, SSB transmission time in a beam direction), of an SSB is not limited in this application. According to the foregoing definition, when the UE-A uses a beam direction k for beam sweeping, resource sensing is also performed during SSB reception/transmission. Therefore, during beam sweeping, the UE-A may also determine a candidate resource set *S_{A}* of each beam direction based on a sensing result. Certainly, this application is not limited to determining the candidate resource set *S_{A}* of each beam direction during beam sweeping, and the candidate resource set *S_{A}* of each beam direction may be determined provided that a beam is used.

During SSB reception, the UE-A further performs RSRP measurement, and all beams with RSRP measurement results greater than an RSRP threshold may be used as a candidate beam set.

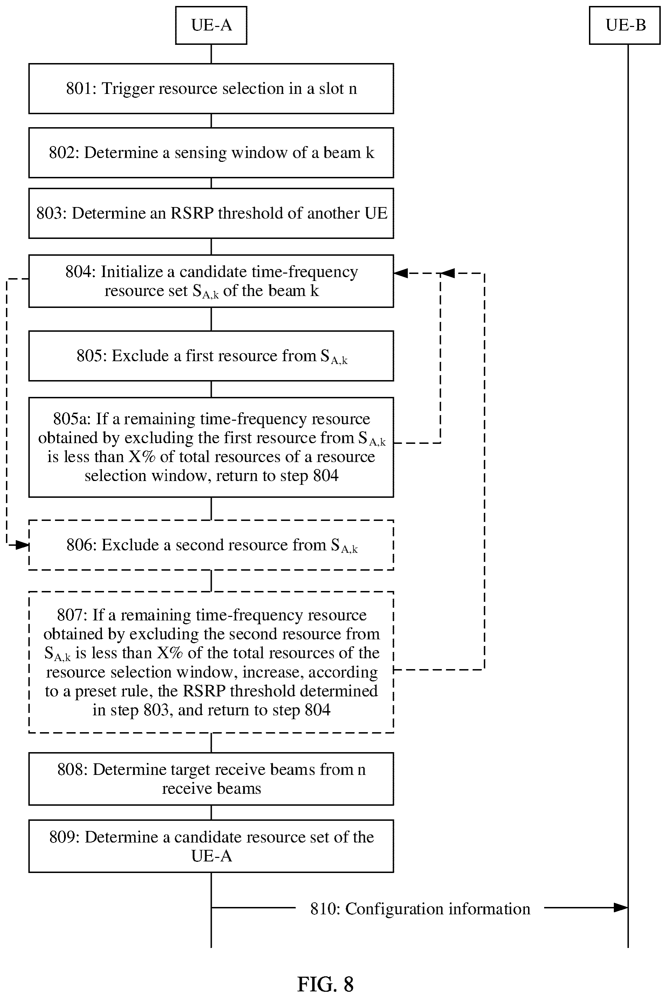

For any receive beam (the receive beam k is used as an example below) of the receive beam 1 to the receive beam n of the UE-A, a resource sensing and resource selection process of the UE-A is shown in FIG. 8, and specifically includes the following steps.

Step 801: The UE-A triggers resource selection in a slot n.

Specifically, selection of a candidate resource set with a unit of one slot and *L_{subCH}* consecutive subchannels is triggered, where a resource selection window is [*n* + *Tₐ, n* + *T_{b}*] . Herein, [*n* + *Tₐ, n + T_{b}*] is a specific example of the resource selection window in the embodiment of FIG. 4(a).

Values of *L_{subCH}, Tₐ,* and *T_{b}* are selected based on an implementation.

In an implementation method, 0 ≤ *T*₁ ≤ T_{proc,1}, where T_{proc,1} is determined based on Table 3, and *µ_{SL}* is an index of a configured subcarrier spacing.

**Table 3**

| *µ_{SL}* | T_{proc,1} |
|---|---|
| 0 | 3 |
| 1 | 5 |
| 2 | 9 |
| 3 | 17 |

In an implementation method, if *T*_{2*min*} configured by an upper layer is less than a remaining packet delay budget (packet delay budget, PDB), *T*_{2*min*} ≤ *T_{b}* ≤ *PDB;* or if *T*_{2*min*} configured by an upper layer is equal to a remaining PDB, *T_{b}* is equal to a remaining PDB.

Step 802: The UE-A determines a sensing window of the beam k.

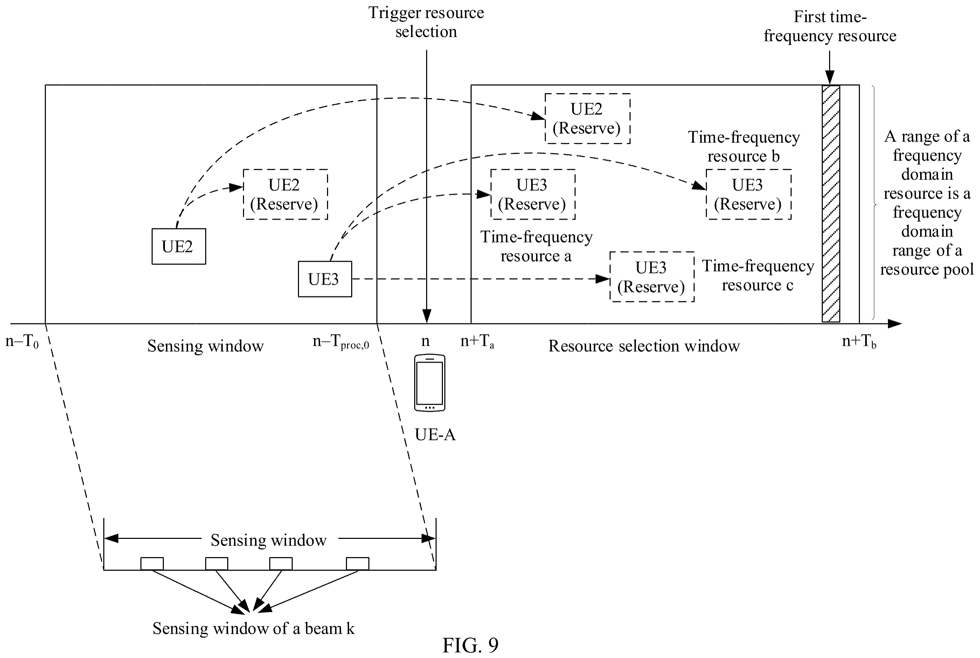

FIG. 9 is an example diagram of a sensing window and a resource selection window of the UE-A. The UE-A senses, in the sensing window, a position of a time-frequency resource used by another UE, and determines a position of a time-frequency resource that is within the resource selection window and that is reserved for another UE. The sensing window includes sensing windows of a plurality of beams of the UE-A.

The sensing window of the beam k is time in which the UE-A uses the beam k in a sensing window [*n* - *T*₀*, n* - T_{proc,0}).

The sensing window of the beam k is as follows: [*n* - *T*₀*, n* - T_{proc,0}) ∩ ([*n - T*₁*ₖ, n* - *T*_{1'*k*}) ∪ [*n* - *T*_{2*k*}, n *- T*_{2'*k*}) ∪ [*n - T*₃*ₖ, n - T*_{3'*k*}) ∪ ...).

*[n* - *T*₁*ₖ, n* - *T*_{1'*k*}) is duration between start time and end time of the 1^{st} transmission/reception of the beam k, [*n* - *T*₂*ₖ, n* - *T*_{2'*k*}) is duration between start time and end time of the 2^{nd} transmission/reception of the beam k, *[n* - *T*₃*ₖ, n* - *T*_{3'*k*}) is duration between start time and end time of the 3^{rd} transmission/reception of the beam k, and so on.

In an implementation method, *T*₀ is configured by using an upper-layer parameter.

In an implementation method, T_{proc,0} is determined based on Table 4, and *µ_{SL}* is an index of a configured subcarrier spacing.

**Table 4**

| *µ_{SL}* | T_{proc,0} |
|---|---|
| 0 | 1 |
| 1 | 1 |
| 2 | 2 |

| *µ_{SL}* | T_{proc,0} |
|---|---|
| 3 | 4 |

Step 803: The UE-A determines an RSRP threshold of another UE.

Specifically, the UE-A receives, in the sensing window of the beam k, SCI sent by one or more UEs, and determines an RSRP threshold of each UE based on a data priority *prio*_{RX} indicated in the SCI and a priority *prio*_{TX} of to-be-sent data of the UE-A. For example, the RSRP threshold is a (*prio*_{RX}+(*prio*_{TX}-1)×8)^{th} threshold in an RSRP threshold set configured for a resource pool.

FIG. 9 is used as an example. It is assumed that the UE-A receives SCI from a UE2 in the sensing window of the beam k, and a reception priority indicated by the SCI is *prio*_{RX*-*2}. In this case, the UE-A determines that an RSRP threshold of the UE2 is a (*prio*_{RX-2}+(*prio*_{TX}-1)×8)^{th} threshold in the RSRP threshold set configured for the resource pool.

Step 804: The UE-A initializes a candidate time-frequency resource set *S_{A,k}* of the beam k.

An initialized candidate time-frequency resource set *S_{A,k}* of the beam k includes all time-frequency resources in the resource selection window.

Step 805: The UE-A excludes a first resource from *S_{A,k}.*

The first resource is an example of the first resource in the embodiment of FIG. 4(a).

The first resource is a periodically reserved resource in the resource selection window, and the periodically reserved resource corresponds to a slot that is in the sensing window of the beam k and that is not sensed by the UE-A. The slot not sensed by the UE-A includes a slot of a transmit beam of the UE-A and/or a slot of a receive beam of the UE-A in another direction (to be specific, a receive beam other than the beam k).

The first resource needs to be excluded because these time-frequency resources may be occupied by another UE to receive/send data. Therefore, to avoid a resource conflict, these time-frequency resources need to be excluded from the candidate time-frequency resource set.

It is assumed that the periodically reserved resource corresponding to the slot that is in the sensing window of the beam k and that is not sensed by the UE-A includes a time-frequency resource 1, a time-frequency resource 2, a time-frequency resource 3, ..., and a time-frequency resource, among these time-frequency resources, that is within the resource selection window includes the time-frequency resource 1. In this case, the time-frequency resource 1 is the first resource that needs to be excluded from *S_{A,k}.*

The periodically reserved resource corresponding to the slot that is in the sensing window of the beam k and that is not sensed by the UE-A is included in all periodically reserved resources configured in the resource pool. To be specific, the time-frequency resource 1, the time-frequency resource 2, the time-frequency resource 3, ..., are some of all the periodically reserved resources configured in the resource pool.

Step 805a: If a remaining time-frequency resource obtained by excluding the first resource from *S_{A,k}* is less than X% of total resources of the resource selection window, return to step 804, and skip step 805 after step 804 is performed.

A value of X% may be configured in the resource pool, and may be related to *prio*_{TX} of the UE-A.

Step 806: The UE-A excludes a second resource from *S_{A,k}*.

When it is determined in step 805a that the remaining time-frequency resource obtained by excluding the first resource from *S_{A,k}* is greater than or equal to X% of the total resources of the resource selection window, *S_{A,k}* in step 806 is the remaining time-frequency resource obtained by excluding the first resource from *S_{A,k}.* When it is determined in step 805a that the remaining time-frequency resource obtained by excluding the first resource from *S_{A,k}* is less than X% of the total resources of the resource selection window, *S_{A,k}* in step 806 is initialized *S_{A,k},* to be specific, *S_{A,k}* from which the first resource has not been excluded.

The second resource includes a reserved time-frequency resource for another UE in the resource selection window. The reserved time-frequency resource may be a periodically reserved resource or an aperiodically reserved resource, and the aperiodically reserved resource may include a time-frequency resource used for retransmission.

Specifically, the UE-A receives SCI from a specific UE in the sensing window of the beam k. After first-stage SCI in the SCI is successfully decoded, if an RSRP measurement result for a PSSCH DMRS of a time-frequency resource reserved by the first-stage SCI is greater than an RSRP threshold of the UE, and the time-frequency resource reserved by the first-stage SCI is in the resource selection window, it is determined that the reserved time-frequency resource is the second resource that needs to be excluded. The second resource may be a retransmission time-frequency resource, used for retransmitting data, of the UE, or may be a periodically reserved time-frequency resource of the UE.

Refer to FIG. 9. It is assumed that the UE-A receives SCI of a UE3 in the sensing window of the beam k. After first-stage SCI in the SCI is successfully decoded, it is determined that a time-frequency resource, within the resource selection window, of a time-frequency resource reserved by the first-stage SCI includes a time-frequency resource a and a time-frequency resource b. In this case, the second resource that needs to be excluded includes the time-frequency resource a and the time-frequency resource b. In addition, the resource selection window further includes a periodically reserved time-frequency resource c of the UE3. Therefore, the second resource that needs to be excluded further includes the time-frequency resource c.

The second resource needs to be excluded because these time-frequency resources have been reserved and occupied by another UE to receive/send data. Therefore, to avoid a resource conflict, these time-frequency resources need to be excluded from candidate time-frequency resources.

Step 807: If a remaining time-frequency resource obtained by excluding the second resource from *S_{A,k}* is less than X% of the total resources of the resource selection window, the UE-A increases, according to a preset rule, the RSRP threshold determined in step 803, and returns to step 804 to continue to perform the process.

Alternatively, if a remaining time-frequency resource obtained by excluding the second resource from *S_{A,k}* is less than X% of the total resources of the resource selection window, the UE-A increases, according to a preset rule, the RSRP threshold determined in step 803, and returns to step 806 to continue to perform the process.

In an implementation method, after determining *S_{A,k},* the UE-A reports *S_{A,k}* to an upper layer (for example, a MAC layer) of the UE-A.

According to the foregoing steps, the UE-A determines the candidate resource set *S_{A,k}* of the receive beam k. In addition, the UE-A may further determine an RSRP measurement result for the receive beam k of the UE-A.

Similarly, the UE-A may also determine candidate resource sets *S*_{*A,*1}, *S*_{*A,*2}, ..., *S*_{*A,k*-1}, *S*_{*A,k*+1}, ..., and *S_{A,n}* of other n-1 receive beams.

Step 806 and step 807 are optional steps.

Step 808: The UE-A determines target receive beams from the n receive beams, where RSRP measurement results for the target receive beams are greater than an RSRP threshold of the UE-A.

The target receive beams determined in this step are the at least two receive beams described in step 401a in the embodiment of FIG. 4(a).

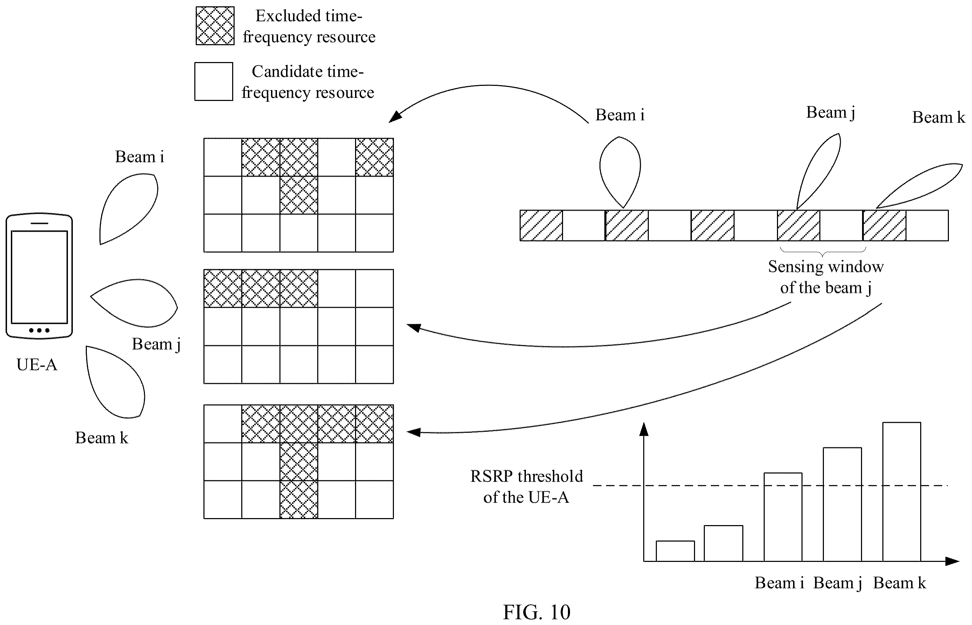

FIG. 10 is an example diagram of beam selection. In this example, it is assumed that RSRP measurement results for the beam i, the beam j, and the beam k among the n beams are greater than the RSRP threshold of the UE-A. Candidate resource sets respectively corresponding to the beam i, the beam j, and the beam k are *S_{A,i}, S_{A,j},* and *S_{A,k}. S_{A,k}* is obtained through step 801 to step 807. *S_{A,i}* and *S_{A,j}* are also obtained through steps similar to step 801 to step 807.

According to the foregoing step 801 to step 808, the target receive beams may be determined from the n receive beams, and candidate resource sets respectively corresponding to the target receive beams may be determined. Step 801 to step 808, as a whole, are a specific example of step 401a in the embodiment of FIG. 4(a). The target receive beams herein are a specific example of the at least two receive beams described in step 401a in the embodiment of FIG. 4(a). The candidate resource sets respectively corresponding to the target receive beams herein are a specific example of the first candidate resource sets respectively corresponding to the at least two receive beams described in step 401a in the embodiment of FIG. 4(a).

Step 809: The UE-A determines a candidate resource set of the UE-A, where the candidate resource set is an intersection set between the candidate resource sets corresponding to the target receive beams of the UE-A.

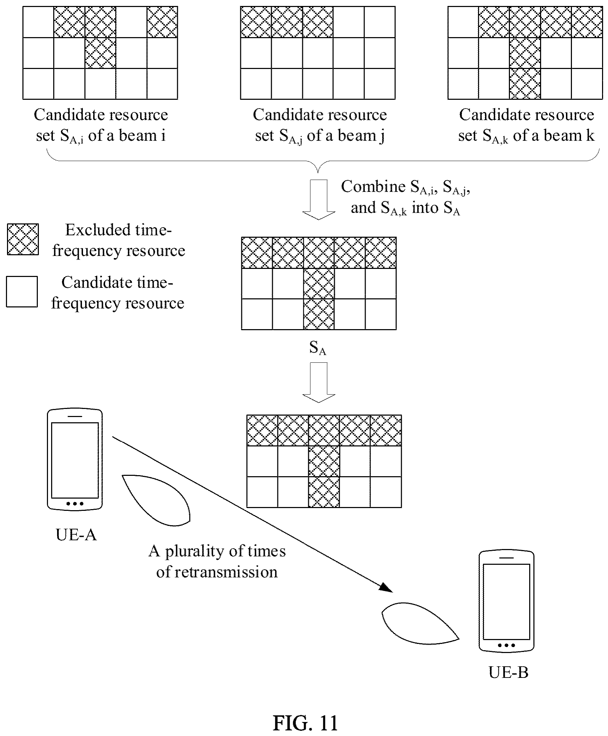

FIG. 11 is an example diagram of determining the candidate resource set of the UE-A. In this example, the UE-A combines the candidate resource sets *S_{A,i}, S_{A,j},* and *S_{A,k}* into *S_{A},* to be specific, obtains an intersection set between available time-frequency resources in *S_{A,i}, S_{A,j},* and *S_{A,k}* to obtain the candidate resource set *S_{A}* of the UE-A.

Step 809 is a specific example of step 402a in the embodiment of FIG. 4(a). The candidate resource set *S_{A}* of the UE-A herein is a specific example of the second candidate resource set in step 402a in the embodiment of FIG. 4(a).

Step 810: The UE-A sends configuration information to the UE-B, where the configuration information indicates the candidate resource set of the UE-A.

Step 810 is a specific example of step 403a in the embodiment of FIG. 4(a). The configuration information herein is a specific example of the configuration information in step 403a in the embodiment of FIG. 4(a).

The UE-B is a transmit end of data, and the UE-A is a receive end of the data. To more accurately determine a candidate resource set in an SL FR2 and avoid a resource conflict, the UE-A serving as the receive end needs to indicate the candidate resource set *S_{A}* of the UE-A to the UE-B by using the configuration information, and the UE-B selects, from the candidate resource set *S_{A}* of the UE-A, a time-frequency resource for sending sidelink information to the UE-A.

In an implementation method, the UE-A uses a MAC CE to carry the configuration information. To avoid a transmission conflict and a half-duplex issue, the MAC CE carrying the configuration information may be retransmitted for a plurality of times.

Because the candidate resource set *S_{A}* of the UE-A is an intersection set between a plurality of target receive beams, when the UE-B sends data to the UE-A on any time-frequency resource in *S_{A},* the UE-A can receive the data through any one of the plurality of target receive beams.

According to definitions and configuration or indication methods of QCL and a TCI, the UE-A not only indicates a TCI of a reference signal to the UE-B, but also needs to indicate a TCI of the candidate resource set *S_{A},* to be specific, indicate a beam direction corresponding to the candidate resource set *S_{A}.* In a possible implementation method, a transmit-end UE (the UE-A) of the candidate resource set *S_{A}* configures *N_{TCI}* SL TCI states and indicates the SL TCI states to a receive-end UE (the UE-B), or *N_{TCI}* SL TCI states are configured in a resource pool, where the configuration information may be carried in RRC signaling, a MAC CE, or SCI. To send the configuration information, the UE-A further needs to send indication information. The indication information indicates an SL TCI state of a reference signal. The SL TCI state of the reference signal is one of the *N_{TCI}* SL TCI states. The reference signal may be an SL-SSB, an SL CSI-RS, a DMRS, or the like. The UE-B may determine the SL TCI state of the reference signal based on the indication information, and determine, based on the SL TCI state of the reference signal, the beam direction corresponding to the candidate resource set *S_{A}.*

For example, it is assumed that SSB indexes of target beams (to be specific, beams with RSRP exceeding the RSRP threshold) of the UE-A are i, j, and k, where a beam with highest RSRP is a beam with an SSB index of k, and correspondingly, an SSB index of a beam of the UE-B is m. In a possible manner, the UE-A indicates the candidate resource set *S_{A}* and an SL TCI state with an SSB index of m, and the UE-B determines, based on the information, that the candidate resource set *S_{A}* of the UE-A corresponds to a beam direction, with an SSB index of m, of the UE-B. In a possible manner, the UE-A indicates the candidate resource set *S_{A}* and an SL TCI state with an SSB index of k, and the UE-B determines, based on the information, that the received candidate resource set *S_{A}* corresponds to a beam direction, with an SSB index of k, of the UE-A (the UE-B knows a correspondence between a beam of the UE-A and a beam direction of the UE-B). In a possible manner, the UE-A indicates the candidate resource set *S_{A},* an SL TCI state with an SSB index of k, and an SL TCI state with an SSB index of m, and the UE-B determines, based on the information, the beam direction corresponding to the candidate resource set *S_{A}* of the UE-A.

The UE-B selects a transmission resource based on the candidate resource set *S_{A}* of the UE-A, where the selected transmission resource is a specific example of the first time-frequency resource in step 404a in the embodiment of FIG. 4(a). The UE-A may receive, on different beams (the beam i, the beam j, and the beam k), data sent by the UE-B, where the sent data is a specific example of the first sidelink information in step 405a in the embodiment of FIG. 4(a). The UE-A may select a receive beam according to the following methods:
(1) A beam with a highest RSRP measurement result is selected.
(2) Different beams are used for different slots/transmission (retransmission).

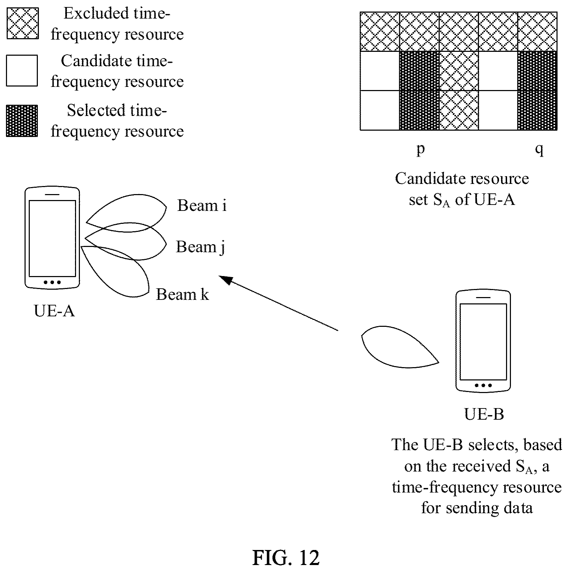

   FIG. 12 is an example diagram in which different time-frequency resources correspond to different beams. A beam used for transmission by using a time-frequency resource p may be different from a beam used for transmission by using a time-frequency resource q.
(3) A receive beam direction is randomly selected.

To be specific, a receive beam is randomly selected from the beam i, the beam j, and the beam k.

In Embodiment 1, during beam matching/beam measurement, a receive-end UE (the UE-A or a first UE) indicates a candidate resource set to a transmit-end UE (the UE-B or a second UE) by determining a plurality of candidate beams and the candidate resource set. When the transmit-end UE selects a transmission resource by using the candidate resource set, the receive-end UE may select any one of a plurality of receive beams for reception, to reduce possible interference caused by a single beam direction, effectively utilize a space domain resource of a beam, and improve communication quality.

### Embodiment 2

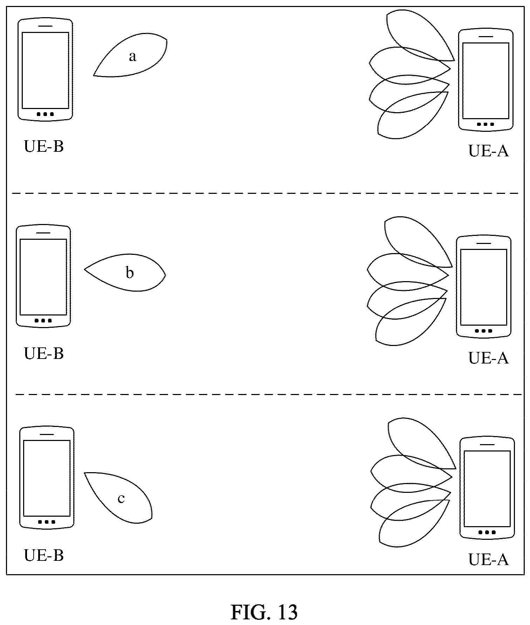

This embodiment provides a method for avoiding interference through beam switching performed by a transmit-end UE. FIG. 13 is an example diagram of beam sweeping. On a transmit beam a, a beam b, and a beam c of a UE-B, a UE-A separately performs beam sweeping on receive beams (a receive beam 1, a receive beam 2, ..., a receive beam k, ..., and a receive beam n, where n is an integer greater than 1). For any beam (the receive beam k is used as an example) of the n receive beams, a definition of a sensing window of the beam and a resource sensing and resource selection process are similar to those in Embodiment 1. Refer to the process in the embodiment of FIG. 8. Details are not described again. In this embodiment, a receive beam set includes the receive beam 1, the receive beam 2, ..., and the receive beam n, and a transmit beam set includes the transmit beam a, the transmit beam b, and the transmit beam c. In the following, the receive beams in the receive beam set are referred to as beams of the UE-A, for example, a beam i, a beam j, and a beam k of the UE-A, and the transmit beams in the transmit beam set are referred to as beams of the UE-B, for example, a beam a, a beam b, and a beam c of the UE-B.

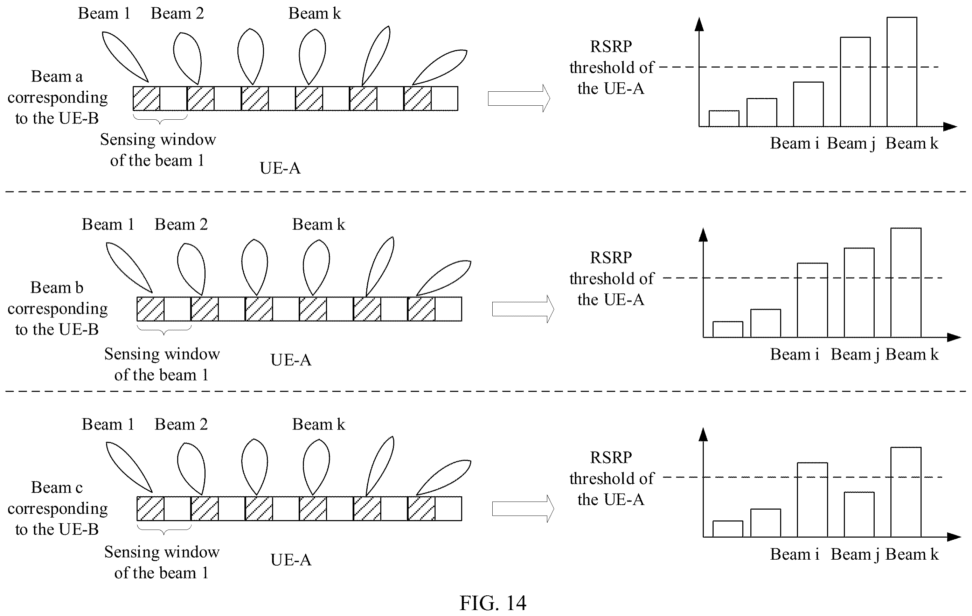

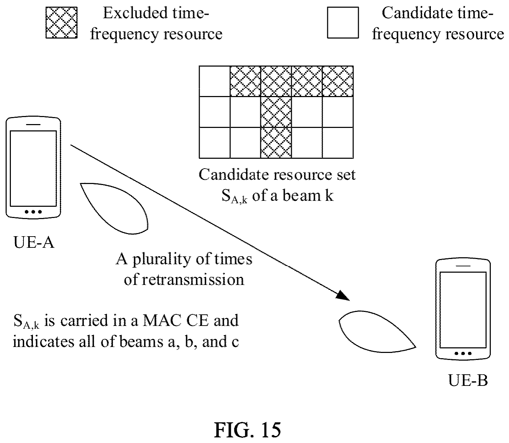

FIG. 14 is an example diagram of beam selection. The UE-A measures RSRP of SSBs on the beam a, the beam b, and the beam c of the UE-B. For the beam a, RSRP measurement results for the beam k and the beam j of the UE-A exceed an RSRP threshold. For the beam b, RSRP measurement results for the beam k, the beam j, and the beam i of the UE-A exceed the RSRP threshold. For the beam c, RSRP measurement results for the beam k and the beam i of the UE-A exceed the RSRP threshold. Therefore, for the UE-A, an RSRP measurement result for the beam k of the UE-A satisfies all of the beam a, the beam b, and the beam c of the UE-B, and the beam k may be used to receive information sent on a plurality of beams of the UE-B. According to a beam-domain sensing and resource selection method, the UE-A determines that a candidate resource set *S_{A}* of the UE-A is a candidate resource set *S_{A,k}* of the beam k. The candidate resource set *S_{A}* of the UE-A is a specific example of the candidate resource set determined in step 401b in the embodiment of FIG. 4(b). The beam k is a specific example of the receive beam in the receive beam set described in step 401b in the embodiment of FIG. 4(b). The UE-A sends configuration information to the UE-B, where the configuration information indicates the candidate resource set *S_{A}* of the UE-A. The configuration information is a specific example of the configuration information in step 402b in the embodiment of FIG. 4(b). The configuration information may be carried in a MAC CE and sent to the UE-B, and the UE-A may further indicate the beam a, the beam b, and the beam c that are used by the UE-B to send data. FIG. 15 is an example diagram of determining the candidate resource set of the UE-A. To avoid a transmission conflict and a half-duplex issue, the UE-A may retransmit, for a plurality of times, the MAC CE carrying the configuration information.

According to definitions and configuration or indication methods of QCL and a TCI, the UE-A not only indicates a TCI of a reference signal to the UE-B, but also needs to indicate a TCI of the candidate resource set *S_{A},* to be specific, indicate a beam direction corresponding to the candidate resource set *S_{A},* and the TCI of the candidate resource set *S_{A}* needs to indicate a plurality of beam directions of the UE-B that correspond to *S_{A}.* In a possible implementation, a transmit-end UE (the UE-A) of the candidate resource set *S_{A}* configures *N_{TCI}* SL TCI states and indicates the SL TCI states to a receive-end UE (the UE-B), or *N_{TCI}* SL TCI states are configured in a resource pool, where the configuration information may be carried in RRC signaling, a MAC CE, or SCI. When sending the configuration information for indicating the candidate resource set *S_{A},* the UE-A further needs to send indication information corresponding to a plurality of transmit beams. The indication information indicates an SL TCI state of a reference signal of a corresponding beam, and the reference signal may be an SL-SSB, an SL CSI-RS, a DMRS, or the like. The UE-B may determine the SL TCI state of the reference signal based on the indication information, and determine, based on the SL TCI state of the reference signal, the plurality of beam directions corresponding to the candidate resource set *S_{A}.*

For example, it is assumed that an SSB index of an available beam of the UE-A (to be specific, a beam with RSRP exceeding the RSRP threshold) is k, and SSB indexes of beams of the UE-B are a, b, and c. In a possible manner, the UE-A indicates the candidate resource set *S_{A}* and an SL TCI state with an SSB index of k, and the UE-B determines, based on the information, that the candidate resource set *S_{A}* of the UE-A corresponds to beam directions, with SSB indexes of a, b, and c, of the UE-B (the UE-B knows a correspondence between a beam of the UE-A and a beam direction of the UE-B). In a possible manner, the UE-A indicates the candidate resource set *S_{A}* and SL TCI states with SSB indexes of a, b, and c, and the UE-B determines, based on the information, that the candidate resource set *S_{A}* of the UE-A corresponds to beam directions, with SSB indexes of a, b, and c, of the UE-B.

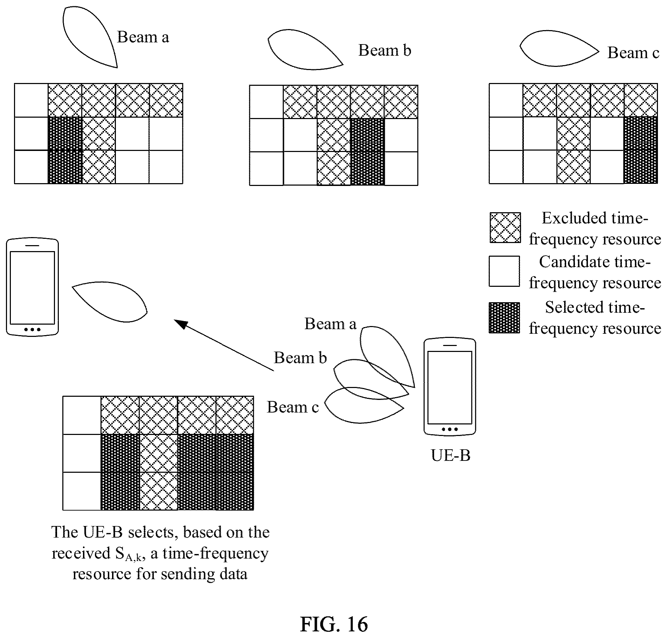

FIG. 16 is a diagram of selecting a transmission resource by a transmit-end UE. The UE-B selects a transmission resource based on the candidate resource set *S_{A}* of the UE-A, where the selected transmission resource is a specific example of the first time-frequency resource in step 403b in the embodiment of FIG. 4(b). The UE-A may receive, on the beam k, data sent by the UE-B, where the sent data is a specific example of the first sidelink information in step 404b in the embodiment of FIG. 4(b). The UE-B may send data to the UE-A on the beam a, the beam b, or the beam c. The UE-B may select a transmit beam according to the following methods:
(1) A beam with a highest RSRP measurement result is selected.
(2) Different beams are used for different slots/transmission (retransmission).
(3) A transmit beam direction is randomly selected.

To be specific, a transmit beam is randomly selected from the beam a, the beam b, and the beam c.

In Embodiment 2, during beam matching/beam measurement, a receive-end UE (the UE-A) determines, through measurement on a reference signal, a plurality of transmit beams corresponding to a receive beam and a candidate resource set, and indicates the candidate resource set and the corresponding beams to a transmit-end UE (the UE-B or a second UE). In this way, the transmit-end UE can select any one of the plurality of transmit beams for transmission, to reduce possible interference caused by a single beam direction, effectively utilize a space domain resource of a beam, and improve communication quality.

### Embodiment 3

This embodiment provides a method for avoiding interference through beam switching jointly performed by a transmit-end UE and a receive-end UE, and is a combination of Embodiment 1 and Embodiment 2.

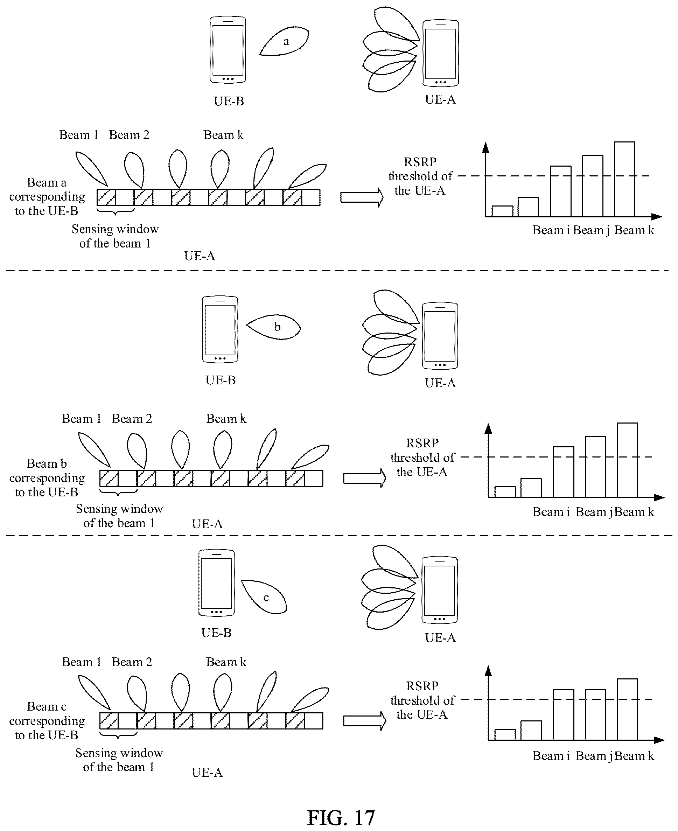

FIG. 17 is an example diagram of beam sweeping. On a transmit beam a, a beam b, and a beam c of a UE-B (namely, a transmit-end UE), a UE-A separately performs beam sweeping on receive beams (a receive beam 1, a receive beam 2, ..., a receive beam k, ..., and a receive beam n, where n is an integer greater than 1). For any receive beam (the receive beam k is used as an example) of the n receive beams, a definition of a sensing window of the beam and a resource sensing and resource selection process are similar to those in Embodiment 1. Refer to the process in the embodiment of FIG. 8. Details are not described again. In this embodiment, a receive beam set includes the receive beam 1, the receive beam 2, ..., and the receive beam n, and a transmit beam set includes the transmit beam a, the transmit beam b, and the transmit beam c. In the following, the receive beams in the receive beam set are referred to as beams of the UE-A, for example, a beam i, a beam j, and a beam k of the UE-A, and the transmit beams in the transmit beam set are referred to as beams of the UE-B, for example, a beam a, a beam b, and a beam c of the UE-B.

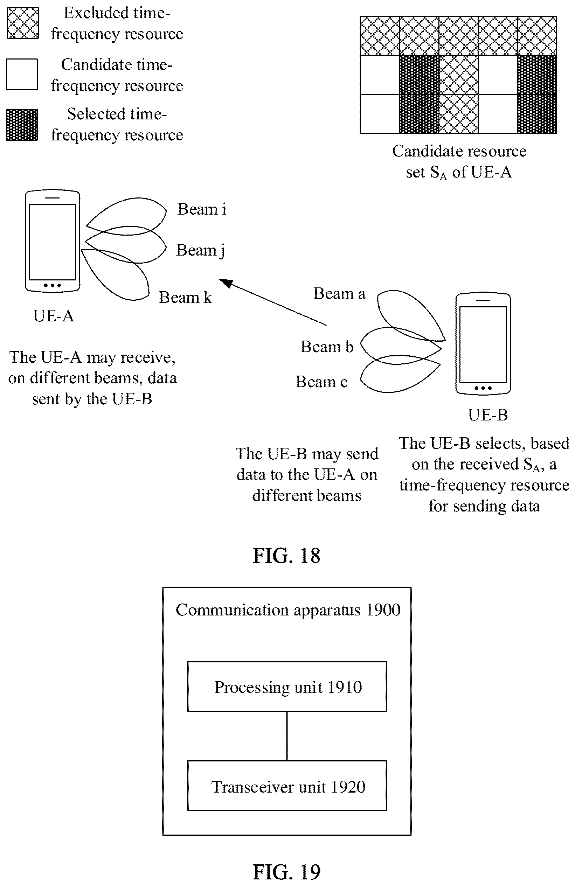

FIG. 18 is an example diagram of beam selection. The UE-A (a receive-end UE) measures RSRP of SSBs on the beam a, the beam b, and the beam c of the UE-B. For the beam a, RSRP measurement results for the beam i, the beam j, and the beam k of the UE-A exceed an RSRP threshold. For the beam b, RSRP measurement results for the beam i, the beam j, and the beam k of the UE-A exceed the RSRP threshold. For the beam c, RSRP measurement results for the beam i, the beam j, and the beam k of the UE-A exceed the RSRP threshold. Therefore, for the UE-A, the beam i, the beam j, and the beam k of the UE-A may be used to receive information sent on a plurality of beams (to be specific, the beam a, the beam b, and the beam c) of the UE-B. To be specific, in this case, both the UE-A and the UE-B may perform receive beam switching and transmit beam switching.

According to a beam-domain sensing and resource selection method, the UE-A combines candidate resource sets *S_{A,i}, S_{A,j},* and *S_{A,k}* into a candidate resource set *S_{A}* of the UE-A. The candidate resource sets *S_{A,i}, S_{A,j},* and *S_{A,k}* are a specific example of the first candidate resource sets respectively corresponding to the at least two receive beams in step 401a in the embodiment of FIG. 4(a). The beams i, j, and k are a specific example of the at least two receive beams in the receive beam set described in step 401a in the embodiment of FIG. 4(a). The candidate resource set *S_{A}* of the UE-A is a specific example of the second candidate resource set determined in step 402a in the embodiment of FIG. 4(a). The UE-A sends configuration information to the UE-B, where the configuration information indicates the candidate resource set *S_{A}* of the UE-A. The configuration information is a specific example of the configuration information in step 403a in the embodiment of FIG. 4(a). The configuration information may be carried in a MAC CE and sent to the UE-B, and may further indicate the beam a, the beam b, and the beam c that are used by the UE-B to send data. To avoid a transmission conflict and a half-duplex issue, the UE-A may retransmit, for a plurality of times, the MAC CE carrying the configuration information. For a method for indicating a TCI state, refer to the descriptions in the foregoing embodiments.

Refer to FIG. 18. The UE-B selects a transmission resource from *S_{A}* based on the received *S_{A},* where the selected transmission resource is a specific example of the first time-frequency resource in step 404a in the embodiment of FIG. 4(a). The UE-A may receive, on the beam i, the beam j, or the beam k, data sent by the UE-B on the beam a, the beam b, or the beam c, where the sent data is a specific example of the first sidelink information in step 405a in the embodiment of FIG. 4(a). To be specific, for data sent by the UE-B on any transmit beam of the beam a, the beam b, or the beam c, the UE-A may receive the data through any receive beam of the beam i, the beam j, or the beam k.

The UE-A may select a receive beam according to the following methods:
(1) A beam with a highest RSRP measurement result is selected.
(2) Different beams are used for different slots/transmission (retransmission).
(3) A receive beam direction is randomly selected.

The UE-B may select a transmit beam according to the following methods:
(1) A beam with a highest RSRP measurement result is selected.
(2) Different beams are used for different slots/transmission (retransmission).
(3) A transmit beam direction is randomly selected.

In Embodiment 3, during beam matching/beam measurement, a receive-end UE (the UE-A) determines, through measurement on a reference signal, a plurality of transmit beams corresponding to a receive beam or a plurality of receive beams and a candidate resource set, and indicates the candidate resource set and the corresponding beams to a transmit-end UE (the UE-B or a second UE). In this way, the transmit-end UE or the receive-end UE can select any one of the plurality of transmit beams or receive beams for transmission or reception, to reduce possible interference caused by a single beam direction, effectively utilize a space domain resource of a beam, and improve communication quality.

It can be understood that, to implement the functions in the foregoing embodiments, the first terminal device or the second terminal device includes corresponding hardware structures and/or software modules for performing the functions. Persons skilled in the art should be easily aware that, in this application, the units and the method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

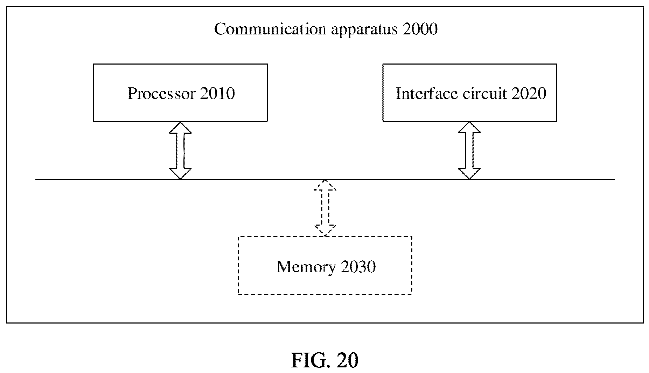

FIG. 19 and FIG. 20 are diagrams of possible structures of communication apparatuses according to embodiments of this application. The communication apparatuses may be configured to implement the functions of the first terminal device or the second terminal device in the foregoing method embodiments, and therefore can also achieve the beneficial effects in the foregoing method embodiments. In embodiments of this application, the communication apparatus may be the first terminal device or the second terminal device shown in FIG. 1(c), or may be a module (for example, a chip) used in the first terminal device or the second terminal device.

A communication apparatus 1900 shown in FIG. 19 includes a processing unit 1910 and a transceiver unit 1920. The communication apparatus 1900 is configured to implement the functions of the first terminal device or the second terminal device in the foregoing method embodiments.

When the communication apparatus 1900 is configured to implement the functions of the first terminal device in the method embodiment of FIG. 4(a), the processing unit 1910 is configured to determine first candidate resource sets respectively corresponding to at least two receive beams in a receive beam set, and determine a second candidate resource set, where the second candidate resource set is an intersection set between the first candidate resource sets respectively corresponding to the at least two receive beams; and the transceiver unit 1920 is configured to send configuration information to a second terminal device, where the configuration information indicates the second candidate resource set, and the second candidate resource set is used to receive sidelink information from the second terminal device.

In a possible implementation method, that the processing unit 1910 is configured to determine the first candidate resource sets respectively corresponding to the at least two receive beams in the receive beam set specifically includes: for each of the at least two receive beams, excluding a first resource from a resource selection window corresponding to each receive beam, to obtain a first candidate resource set corresponding to each receive beam, where the first resource includes a periodic resource that is within the resource selection window and that corresponds to an unsensed slot in a sensing window corresponding to each receive beam.

In a possible implementation method, the transceiver unit 1920 is further configured to receive at least one reference signal from the second terminal device, and determine the at least two receive beams in the receive beam set based on the at least one reference signal, where RSRP measurement results, for the reference signal, that respectively correspond to the at least two receive beams are greater than an RSRP threshold.

In a possible implementation method, the at least one reference signal includes one reference signal; and that the processing unit 1910 is configured to determine the at least two receive beams in the receive beam set based on the at least one reference signal specifically includes: determining the at least two receive beams based on RSRP measurement results obtained when the reference signal is received separately by using receive beams in the receive beam set.

In a possible implementation method, the at least one reference signal includes at least two reference signals; and the determining the at least two receive beams in the receive beam set based on the at least one reference signal specifically includes: determining, based on RSRP measurement results obtained when the at least two reference signals are received separately by using receive beams in the receive beam set, at least two target receive beams respectively corresponding to the receive beams in the receive beam set, where RSRP measurement results, for the reference signals, that respectively correspond to the at least two target receive beams are greater than the RSRP threshold; and determining, as the at least two receive beams, an intersection set between the at least two target receive beams respectively corresponding to the receive beams in the receive beam set.

In a possible implementation method, the processing unit 1910 is further configured to determine at least one transmit beam in a transmit beam set based on the at least one reference signal, where the transmit beam set includes a transmit beam of the second terminal device, and an RSRP measurement result for a receive beam corresponding to the at least one transmit beam is greater than the RSRP threshold.

In a possible implementation method, the transceiver unit 1920 is further configured to send indication information to the second terminal device, where the indication information indicates the at least one transmit beam.

In a possible implementation method, that the indication information indicates the at least one transmit beam includes: The indication information is identification information of an SL TCI state, and the identification information of the SL TCI state corresponds to at least one first signal.

In a possible implementation method, the first signal is an SL-SSB or an SL CSI-RS.

In a possible implementation method, the transceiver unit 1920 is further configured to receive first sidelink information from the second terminal device through a first receive beam of the at least two receive beams.

In a possible implementation method, an RSRP measurement result corresponding to the first receive beam is a highest one of the RSRP measurement results corresponding to the at least two receive beams.

In a possible implementation method, the first receive beam is any one of the at least two receive beams.

In a possible implementation method, the transceiver unit 1920 is further configured to receive second sidelink information from the second terminal device through a second receive beam of the at least two receive beams.

In a possible implementation method, the configuration information is carried in SCI and/or a MAC CE.

When the communication apparatus 1900 is configured to implement the functions of the second terminal device in the method embodiment of FIG. 4(a), the transceiver unit 1920 is configured to receive configuration information from a first terminal device, where the configuration information indicates a second candidate resource set, and a time-frequency resource in the second candidate resource set is an intersection set between first candidate resource sets respectively corresponding to at least two receive beams of the first terminal device; the processing unit 1910 is configured to select a first time-frequency resource from the second candidate resource set; and the transceiver unit 1920 is further configured to send first sidelink information to the first terminal device on the first time-frequency resource.

In a possible implementation method, the transceiver unit 1920 is further configured to receive indication information from the first terminal device, where the indication information indicates at least one transmit beam in a transmit beam set of the second terminal device.

In a possible implementation method, that the indication information indicates the at least one transmit beam in the transmit beam set of the second terminal device includes: The indication information is identification information of an SL TCI state, and the identification information of the SL TCI state corresponds to at least one first signal.

In a possible implementation method, the first signal is an SL-SSB or an SL CSI-RS.

In a possible implementation method, that the transceiver unit 1920 is configured to send the first sidelink information to the first terminal device on the first time-frequency resource specifically includes: sending the first sidelink information to the first terminal device on the first time-frequency resource through a first transmit beam of the at least one transmit beam.

In a possible implementation method, an RSRP measurement result for a receive beam corresponding to the first transmit beam is a highest one of an RSRP measurement result for a receive beam corresponding to the at least one transmit beam.

In a possible implementation method, the first transmit beam is any one of the at least one transmit beam.

In a possible implementation method, the processing unit 1910 is further configured to select a second time-frequency resource from the second candidate resource set; and the transceiver unit 1920 is further configured to send second sidelink information to the first terminal device on the second time-frequency resource through a second transmit beam of the at least one transmit beam.

In a possible implementation method, the configuration information is carried in SCI and/or a MAC CE.

When the communication apparatus 1900 is configured to implement the functions of the first terminal device in the method embodiment of FIG. 4(b), the processing unit 1910 is configured to determine a candidate resource set corresponding to a receive beam in a receive beam set; and the transceiver unit 1920 is configured to send configuration information to a second terminal device, where the configuration information indicates the candidate resource set, and the candidate resource set is used for the second terminal device to send sidelink information to the terminal device on a time-frequency resource in the candidate resource set.

In a possible implementation method, that the processing unit 1910 is configured to determine the candidate resource set corresponding to the receive beam in the receive beam set specifically includes: excluding a first resource from a resource selection window corresponding to the receive beam, to obtain the candidate resource set corresponding to the receive beam, where the first resource includes a periodic resource that is within the resource selection window and that corresponds to an unsensed slot in a sensing window corresponding to the receive beam.

In a possible implementation method, the transceiver unit 1920 is further configured to receive at least two reference signals from the second terminal device, and determine the receive beam in the receive beam set based on the at least two reference signals, where an RSRP measurement result for a reference signal corresponding to the receive beam is greater than an RSRP threshold.

In a possible implementation method, that the processing unit 1910 is configured to determine the receive beam in the receive beam set based on the at least two reference signals specifically includes: determining, based on RSRP measurement results obtained when the at least two reference signals are received separately by using receive beams in the receive beam set, at least one target receive beam respectively corresponding to the receive beams in the receive beam set, where RSRP measurement results, for the reference signals, that respectively correspond to the at least one target receive beam are greater than the RSRP threshold; and determining, as the receive beam, an intersection set between the at least one target receive beam respectively corresponding to the receive beams in the receive beam set.

In a possible implementation method, the processing unit 1910 is further configured to determine at least two transmit beams in a transmit beam set based on the at least two reference signals, where the transmit beam set includes a transmit beam of the second terminal device, and RSRP measurement results for receive beams corresponding to the at least two transmit beams are greater than the RSRP threshold.

In a possible implementation method, the transceiver unit 1920 is further configured to send indication information to the second terminal device, where the indication information indicates the at least two transmit beams.

In a possible implementation method, that the indication information indicates the at least two transmit beams includes: The indication information is identification information of an SL TCI state, and the identification information of the SL TCI state corresponds to at least two first signals.

In a possible implementation method, the first signal is an SL-SSB or an SL CSI-RS.

In a possible implementation method, the configuration information is carried in SCI and/or a MAC CE.

When the communication apparatus 1900 is configured to implement the functions of the second terminal device in the method embodiment of FIG. 4(b), the transceiver unit 1920 is configured to receive configuration information from a first terminal device, where the configuration information indicates a candidate resource set corresponding to a receive beam in a receive beam set of the first terminal device; the processing unit 1910 is configured to select a first time-frequency resource from the candidate resource set; and the transceiver unit 1920 is further configured to send first sidelink information to the first terminal device on the time-frequency resource.

In a possible implementation method, the transceiver unit 1920 is further configured to receive indication information from the first terminal device, where the indication information indicates at least two transmit beams in a transmit beam set of the second terminal device.

In a possible implementation method, that the indication information indicates the at least two transmit beams in the transmit beam set of the second terminal device includes: The indication information is identification information of an SL TCI state, and the identification information of the SL TCI state corresponds to at least two first signals.

In a possible implementation method, the first signal is an SL-SSB or an SL CSI-RS.

In a possible implementation method, that the transceiver unit 1920 is configured to send the first sidelink information to the first terminal device on the first time-frequency resource specifically includes: sending the first sidelink information to the first terminal device on the first time-frequency resource through a first transmit beam of the at least two transmit beams.

In a possible implementation method, an RSRP measurement result for a receive beam corresponding to the first transmit beam is a highest one of RSRP measurement results for receive beams corresponding to the at least two transmit beams.

In a possible implementation method, the first transmit beam is any one of the at least two transmit beams.

In a possible implementation method, the processing unit 1910 is further configured to select a second time-frequency resource from the candidate resource set; and the transceiver unit 1920 is further configured to send second sidelink information to the first terminal device on the second time-frequency resource through a second transmit beam of the at least two transmit beams.

In a possible implementation method, the configuration information is carried in SCI and/or a MAC CE.

For more detailed descriptions of the processing unit 1910 and the transceiver unit 1920, directly refer to related descriptions in the foregoing method embodiments. Details are not described herein again.

A communication apparatus 2000 shown in FIG. 20 includes a processor 2010 and an interface circuit 2020. The processor 2010 and the interface circuit 2020 are coupled to each other. It can be understood that the interface circuit 2020 may be a transceiver or an input/output interface. Optionally, the communication apparatus 2000 may further include a memory 2030, configured to store instructions to be executed by the processor 2010, or store input data needed for running instructions by the processor 2010, or store data generated after the processor 2010 runs instructions.

When the communication apparatus 2000 is configured to implement the foregoing method embodiments, the processor 2010 is configured to implement the functions of the processing unit 1910, and the interface circuit 2020 is configured to implement the functions of the transceiver unit 1920.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented by hardware, or may be implemented by a processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in the first terminal device or the second terminal device. Certainly, the processor and the storage medium may alternatively exist in an access network device or a terminal as discrete components.

All or some of the foregoing embodiments may be implemented by software, hardware, firmware, or any combination thereof. When the embodiments are implemented by software, all or some of the embodiments may be implemented in a form of a computer program product. The computer program product includes one or more computer programs or instructions. The computer program (English: Computer Program) is a set of instructions that indicate each step of an electronic computer or another device with a message processing capability, is usually written in a program design language, and is run in a target system structure. When the computer programs or instructions are loaded and executed on a computer, all or some of the processes or the functions in embodiments of this application are performed. The computer may be a general-purpose computer, a dedicated computer, a computer network, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible to a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. In the text descriptions of this application, the character "/" usually indicates an "or" relationship between the associated objects. In a formula in this application, the character "/" indicates a "division" relationship between the associated objects.

It can be understood that various numbers in embodiments of this application are merely intended for differentiation for ease of description, but not to limit the scope of embodiments of this application. Sequence numbers of the foregoing processes do not mean an execution sequence. The execution sequence of the processes should be determined based on functions and internal logic of the processes.

## Claims

1. A communication method, applied to a first terminal device or a module of a first terminal device, wherein the method comprises:
determining first candidate resource sets respectively corresponding to at least two receive beams in a receive beam set;
determining a second candidate resource set, wherein the second candidate resource set is an intersection set between the first candidate resource sets respectively corresponding to the at least two receive beams; and
sending configuration information to the second terminal device, wherein the configuration information indicates the second candidate resource set, and the second candidate resource set is used to receive sidelink information from the second terminal device.

2. The method according to claim 1, wherein determining the first candidate resource sets respectively corresponding to the at least two receive beams in the receive beam set comprises:
for each of the at least two receive beams, excluding a first resource from a resource selection window corresponding to each receive beam, to obtain a first candidate resource set corresponding to each receive beam, wherein the first resource comprises a periodic resource that is within the resource selection window and that corresponds to an unsensed slot in a sensing window corresponding to each receive beam.

3. The method according to claim 1 or 2, wherein the method further comprises:
receiving at least one reference signal from the second terminal device; and
determining the at least two receive beams in the receive beam set based on the at least one reference signal, wherein reference signal received power RSRP measurement results, for the reference signal, that respectively correspond to the at least two receive beams are greater than an RSRP threshold.

4. The method according to claim 3, wherein the at least one reference signal comprises one reference signal; and
determining the at least two receive beams in the receive beam set based on the at least one reference signal comprises:
determining the at least two receive beams based on RSRP measurement results obtained when the reference signal is received separately by using receive beams in the receive beam set.

5. The method according to claim 3, wherein the at least one reference signal comprises at least two reference signals; and
determining the at least two receive beams in the receive beam set based on the at least one reference signal comprises:
determining, based on RSRP measurement results obtained when the at least two reference signals is received separately by using receive beams in the receive beam set, at least two target receive beams respectively corresponding to the receive beams in the receive beam set, wherein RSRP measurement results, for the reference signals, that respectively correspond to the at least two target receive beams are greater than the RSRP threshold; and
determining, as the at least two receive beams, an intersection set between the at least two target receive beams respectively corresponding to the receive beams in the receive beam set.

6. The method according to any one of claims 3 to 5, wherein the method further comprises:
determining at least one transmit beam in a transmit beam set based on the at least one reference signal, wherein the transmit beam set comprises a transmit beam of the second terminal device, and the at least one transmit beam corresponds to the at least two receive beams.

7. The method according to claim 6, wherein the method further comprises:
sending indication information to the second terminal device, wherein the indication information indicates the at least one transmit beam.

8. The method according to claim 7, wherein that the indication information indicates the at least one transmit beam comprises:
the indication information is identification information of a sidelink transmission configuration indicator SL TCI state, and the identification information of the SL TCI state corresponds to at least one first signal.

9. The method according to claim 8, wherein the first signal is a sidelink synchronization signal block SL-SSB or a sidelink channel state information reference signal SL CSI-RS.

10. The method according to any one of claims 1 to 9, wherein the method further comprises:
receiving first sidelink information from the second terminal device through a first receive beam of the at least two receive beams.

11. The method according to claim 10, wherein an RSRP measurement result corresponding to the first receive beam is a highest one of the RSRP measurement results corresponding to the at least two receive beams.

12. The method according to claim 10, wherein the first receive beam is any one of the at least two receive beams.

13. The method according to any one of claims 10 to 12, wherein the method further comprises:
receiving second sidelink information from the second terminal device through a second receive beam of the at least two receive beams.

14. The method according to any one of claims 1 to 13, wherein the configuration information is carried in sidelink control information SCI and/or a medium access control control element MAC CE.

15. A communication method, applied to a second terminal device or a module of a second terminal device, wherein the method comprises:
receiving configuration information from a first terminal device, wherein the configuration information indicates a second candidate resource set, and a time-frequency resource in the second candidate resource set is an intersection set between first candidate resource sets respectively corresponding to at least two receive beams of the first terminal device; and
selecting a first time-frequency resource from the second candidate resource set, and sending first sidelink information to the first terminal device on the first time-frequency resource.

16. The method according to claim 15, wherein the method further comprises:
receiving indication information from the first terminal device, wherein the indication information indicates at least one transmit beam in a transmit beam set of the second terminal device.

17. The method according to claim 16, wherein that the indication information indicates the at least one transmit beam in the transmit beam set of the second terminal device comprises:
the indication information is identification information of a sidelink transmission configuration indicator SL TCI state, and the identification information of the SL TCI state corresponds to at least one first signal.

18. The method according to claim 17, wherein the first signal is a sidelink synchronization signal block SL-SSB or a sidelink channel state information reference signal SL CSI-RS.

19. The method according to any one of claims 16 to 18, wherein sending the first sidelink information to the first terminal device on the first time-frequency resource comprises:
sending the first sidelink information to the first terminal device on the first time-frequency resource through a first transmit beam of the at least one transmit beam.

20. The method according to claim 19, wherein an RSRP measurement result for a receive beam corresponding to the first transmit beam is a highest one of an RSRP measurement result for a receive beam corresponding to the at least one transmit beam.

21. The method according to claim 19, wherein the first transmit beam is any one of the at least one transmit beam.

22. The method according to any one of claims 19 to 21, wherein the method further comprises:
selecting a second time-frequency resource from the second candidate resource set, and sending second sidelink information to the first terminal device on the second time-frequency resource through a second transmit beam of the at least one transmit beam.

23. The method according to any one of claims 15 to 22, wherein the configuration information is carried in sidelink control information SCI and/or a medium access control control element MAC CE.

24. A communication apparatus, comprising a processor and an interface circuit, wherein the processor is configured to communicate with another apparatus through the interface circuit, and perform the method according to any one of claims 1 to 14, or perform the method according to any one of claims 15 to 23.

25. A communication apparatus, comprising a module for performing the method according to any one of claims 1 to 14 or the method according to any one of claims 15 to 23.

26. A communication apparatus, comprising a processor coupled to a memory, wherein the processor is configured to invoke a program stored in the memory, to perform the method according to any one of claims 1 to 14, or perform the method according to any one of claims 15 to 23.

27. A communication apparatus, comprising a processor and a memory, wherein the memory is configured to store computer instructions, and when the communication apparatus runs, the processor executes the computer instructions stored in the memory, to perform the method according to any one of claims 1 to 14, or perform the method according to any one of claims 15 to 23.

28. A computer-readable storage medium, wherein the storage medium stores a computer program or instructions, and when the computer program or instructions is/are executed by a communication apparatus, the method according to any one of claims 1 to 14 is implemented, or the method according to any one of claims 15 to 23 is implemented.

29. A communication system, comprising a first terminal device for performing the method according to any one of claims 1 to 14, and a second terminal device for performing the method according to any one of claims 15 to 23.
